# EUROPEAN PATENT SPECIFICATION

(11) **EP 4 550 472 B1**
(45) Date of publication and mention of the grant of the patent: **25.11.2026**
(21) Application number: 24205727.1
(22) Date of filing: 10.10.2024
(51) Int. Cl.: H01M 4/58, H01M 4/36, H01M 4/525

(54) **CATHODE MIXTURE, ALL-SOLID-STATE SECONDARY BATTERY INCLUDING CATHODE INCLUDING THE SAME, AND METHOD OF MANUFACTURING THE ALL-SOLID-STATE SECONDARY BATTERY**
KATHODENMISCHUNG, FESTKÖRPERSEKUNDÄRBATTERIE DAMIT UND VERFAHREN ZUR HERSTELLUNG DER FESTKÖRPERSEKUNDÄRBATTERIE
MÉLANGE DE CATHODE, BATTERIE SECONDAIRE ENTIÈREMENT SOLIDE COMPRENANT UNE CATHODE LE COMPRENANT ET PROCÉDÉ DE FABRICATION DE LA BATTERIE SECONDAIRE ENTIÈREMENT SOLIDE

(30) Priority: 27.10.2023 KR 20230145422
(43) Date of publication of application: 07.05.2025
(73) Proprietor: SAMSUNG SDI CO., LTD., Yongin-si, Gyeonggi-do 17084 (KR)
(72) Inventor: Shim, Kyueun, 17084 Gyeonggi-do (KR); Son, Inhyuk, 17084 Gyeonggi-do (KR); Jo, Sungnim, 17084 Gyeonggi-do (KR); Lee, Jieun, 17084 Gyeonggi-do (KR); Lim, Hyungsub, 17084 Gyeonggi-do (KR); Park, Taehyun, 17084 Gyeonggi-do (KR)
(74) Representative: Michalski Hüttermann & Partner mbB

(56) References cited:
- CN-B- 109 921 090
- US-A1- 2013 295 469
- US-B2- 10 347 917
- US-B2- 11 631 887
- KOICHI KANO ET AL: "Careful analysis of XRD patterns with Attention", ARXIV.ORG, CORNELL UNIVERSITY LIBRARY, 201 OLIN LIBRARY CORNELL UNIVERSITY ITHACA, NY 14853, 2 June 2020 (2020-06-02), XP081690232

## Description

### CROSS-REFERENCE TO RELATED APPLICATION

This application claims priority to and the benefit of Korean Patent Application No. 10-2023-0145422, filed on October 27, 2023, in the Korean Intellectual Property Office.

### BACKGROUND

### 1. Field

According to one or more embodiments, the present disclosure relates to a cathode mixture, an all-solid-state secondary battery including a cathode including the same, and a method of manufacturing the all-solid-state secondary battery.

### 2. Description of the Related Art

Recently, in accordance with industrial demand, batteries having relatively high energy density and relatively high safety have been actively developed or pursued. For example, lithium batteries have been utilized practically not only in the fields of information-related devices and communication devices, but also in the automotive field (e.g., vehicles or electric vehicles), and/or the like. Because vehicles are intimately intertwined and related to people's activities, e.g., on an everyday basis, safety is important.

Lithium batteries utilize, as electrolytes, electrolyte solutions including combustible organic solvents, and thus, may include a risk of overheating and the possibility of fire and/or explosions if (e.g., when) a short circuit occurs.

Thus, all-solid-state batteries utilizing a solid electrolyte instead of an electrolyte solution have been proposed. For example, all-solid-state batteries do not utilize combustible organic solvents, and thus, the likelihood of risk of fire and/or explosion can be greatly reduced even if (e.g., when) a short circuit occurs. These all-solid-state batteries may increase safety (e.g., significantly increase safety) compared to lithium batteries utilizing electrolyte solutions.

Secondary batteries utilize sulfur-based materials as cathode active materials to increase capacity. If(e.g., when) sulfur-based materials are utilized, the theoretical energy capacity of secondary batteries is higher than that of lithium-ion batteries. Because sulfur-based materials are inexpensive, the manufacturing costs of secondary batteries may be reduced.

In lithium-sulfur batteries utilizing liquid electrolytes, polysulfide produced by reaction between lithium ions and sulfur dissolves into an electrolyte solution, thereby reducing battery capacity and lifespan. In contrast, if (e.g., when) solid electrolytes are utilized, dissolution of lithium polysulfide in an electrolyte solution does not occur, and safety may be ensured due to exclusion of the combustible organic solvents.

In a cathode of a lithium-sulfur battery utilizing a solid electrolyte, the performance of the cathode may fluctuate depending on a method of mixing a lithium sulfide-based cathode active material, a conductive material, and a solid electrolyte.

US 10 347 917 B2 and US 11 631 887 B2 disclose cathodes of all-solid-state lithium-sulfur batteries.

### SUMMARY

One or more aspects are directed toward a cathode mixture that enables the manufacture of a cathode with an improved ion transport ability due to reduced damage to a solid electrolyte.

One or more aspects provide an all-solid-state secondary battery with improved capacity characteristics by including the herein-described cathode and a method of manufacturing the same.

Additional aspects will be set forth in part in the description which follows and, in part, will be apparent from the description, or may be learned by practice of the presented embodiments of the present disclosure.

According to one or more embodiments, a cathode mixture includes a lithium sulfide composite and a solid electrolyte, wherein, in an X-ray diffraction analysis spectrum of the cathode mixture, a first peak that appears (e.g., exists) at a diffraction angle 2θ of about 26° to about 27.5° has a first intensity (I_{A}), and a second peak that appears (e.g., exists) at a diffraction angle 2θ of about 30.02° to about 30.06° has a second intensity (Is), wherein an intensity ratio ((I_{B} /I_{A}) of the second intensity to the first intensity satisfies 1<I_{B} /I_{A}≤2.

According to one or more embodiments, an all-solid-state secondary battery includes a cathode including the cathode mixture, an anode, and a solid electrolyte layer provided therebetween (e.g., the cathode and the anode).

According to one or more embodiments, a method of manufacturing an all-solid-state secondary battery includes mildly mixing a lithium sulfide composite and a solid electrolyte to obtain a cathode mixture, providing the cathode mixture on a cathode current collector, followed by drying, to manufacture a cathode, preparing an anode, and positioning an electrolyte between the cathode and the anode.

### BRIEF DESCRIPTION OF THE DRAWINGS

The preceding and other aspects, features, and advantages of certain embodiments of the present disclosure will be more apparent from the following description taken in conjunction with the accompanying drawings, in which:
FIG. 1A illustrates X-ray diffraction (XRD) spectra of bare Li₂S utilized in Preparation Example 3, pulverized Li₂S, a Li₂S-LiI composite prepared in a first process of Preparation Example 3, and a Li₂S-LiI-CNF composite prepared in Preparation Example 3;
FIG. 1B illustrates an XRD spectrum of a cathode mixture prepared according to Example 4;
FIG. 1C illustrates an XRD spectrum of a cathode mixture prepared according to Comparative Example 2; and
FIGS. 2 - 6 are cross-sectional views of all-solid-state secondary batteries according to one or more embodiments of the present disclosure.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described , by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list.

Various embodiments are illustrated in the accompanying drawings. However, the present disclosure may be embodied in many different forms and should not be construed as being limited to the embodiments set forth herein. Rather, these embodiments are provided so that this disclosure will be thorough and complete, and will fully convey the scope of the present disclosure to those of ordinary skill in the art. Like reference numerals denote like elements, and duplicative descriptions thereof may not be provided.

It will be understood that, if (e.g., when) an element is referred to as being "on" another element, it can be directly on the other element or intervening elements may be present therebetween. In contrast, if (e.g., when) an element is referred to as being "directly on" another element, there are no intervening elements present.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer or section. Thus, a first element, component, region, layer or section described herein may be termed a second element, component, region, layer or section without departing from the teachings set forth herein.

The terminology utilized herein is for the purpose of describing particular embodiments only and is not intended to limit the present disclosure. An expression in the singular forms "a," "an," and "the" is intended to include an expression in the plural including "at least one," unless the context clearly indicates otherwise. "At least one" should not be construed as being limited to the singular. As utilized herein, the term "and/or" includes any and all combinations of one or more of the associated listed items. It will be further understood that the terms "includes," "including," "include," "having," "has," "have," "comprise," "comprises" and/or "comprising" as utilized in this specification specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if(e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized hereinbelow is utilized for the purpose of describing particular embodiments only and is not intended to limit the present disclosure. As utilized herein, the singular forms are intended to include the plural forms as well, unless the context clearly indicates otherwise. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Exemplary embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

If (e.g., when) it is described that an element is "on" another element, it will be understood that the element may be provided directly on another element or still another element may be interposed therebetween. On the other hand, if (e.g., when) it is described that an element is "directly on" another element, still another element is not interposed therebetween.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

### Definitions

The term "Group" refers to a group of the Periodic Table of the Elements according to the International Union of Pure and Applied Chemistry ("IUPAC") Groups 1-18 group classification system.

Unless otherwise defined herein, the particle diameter may be an average particle diameter. Also, particle diameter refers to an average particle diameter (D50), which refers to the diameter of particles having a cumulative volume of 50 vol% in particle size distribution. The average particle diameter (D50) may be measured by utilizing a method widely suitable in the art, and may be measured, for example, by utilizing a particle size analyzer or from a transmission electron microscope image or a scanning electron microscope image. As another method, a dynamic light-scattering measurement device may be utilized to perform measurement and data analysis, the number of particles may be counted for each particle size range, and then the average particle diameter (D50) may be obtained through calculation therefrom. In some embodiments, the average particle diameter (D50) may be measured by utilizing a laser diffraction method. If (e.g., when) measurement is performed by a laser diffraction method, for example, particles to be measured may be dispersed in a dispersion medium, and then may be irradiated with ultrasonic waves of about 28 kHz at an output of 60 W by utilizing a commercially available laser diffraction particle size measurement device (e.g., Microtrac MT 3000), and then the average particle diameter (D50) on the basis of 50% of the particle diameter distribution in the measurement device may be calculated.

The term "particle diameter" or "crystallite size" as utilized herein refers to an average diameter of particles or crystallites if (e.g., when) the particles or crystallites are spherical and refers to an average major axis length of particles or crystallites if(e.g., when) the particles or crystallites are non-spherical. The particle diameter or crystallite size may be measured by utilizing a particle size analyzer (PSA). "Particle diameter" or "crystallite size" may be, for example, an average particle diameter or an average crystallite size. The "average particle diameter or average crystallite size" may be, for example, D50, which is a median particle diameter or crystallite size.

D50 refers to a size of particles (e.g., crystallites) corresponding to a cumulative volume of 50 % calculated from the side of particles having the smallest particle size in a particle size distribution as measured by a laser diffraction method.

D90 refers to a size of particles corresponding to a cumulative volume of 90 % calculated from the side of particles having the smallest particle size in a particle size distribution as measured by a laser diffraction method.

D10 refers to a size of particles corresponding to a cumulative volume of 10 % calculated from the side of particles having the smallest particle size in a particle size distribution as measured by a laser diffraction method.

The term "metal" as utilized herein includes both (e.g., simultaneously) metals and metalloids such as silicon and germanium, in elemental or ionic states.

The term "alloy" as utilized herein refers to a mixture of two or more metals.

The term "electrode active material" as utilized herein refers to an electrode material that can undergo lithiation and delithiation.

The term "cathode active material" as utilized herein refers to a cathode material that can undergo lithiation and delithiation, and the term "anode active material" as utilized herein refers to an anode material that can undergo lithiation and delithiation.

The terms "lithiation" and "lithiate" as utilized herein refer to a process of adding lithium to an electrode active material, and the terms "delithiation" and "delithiate" as utilized herein refer to a process of removing lithium from an electrode active material.

The terms "charging" and "charge" as utilized herein refer to a process of providing electrochemical energy to a battery, and the terms "discharging" and "discharge" as utilized herein refer to a process of removing electrochemical energy from a battery.

The term "positive electrode" and "cathode" as utilized herein refers to an electrode where electrochemical reduction and lithiation occur during a discharge process, and the term "negative electrode" and "anode" as utilized herein refers to an electrode where electrochemical oxidation and delithiation occur during a discharge process.

The term "combination thereof" as utilized herein may refer to a mixture, laminate, composite, copolymer, alloy, blend, reaction product and/or the like of constituents.

In present disclosure, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

The term "length", "thickness", and "width" as utilized herein refers to, for example, an average length, an average thickness, and an average width respectively. The "length", "thickness", and "width" measured utilizing software from a scanning electron microscope image.

In the present disclosure, the term "aspect ratio" represents the ratio (L1/L2) of the major axis length L1 (eg, length) and the minor axis length L2 (eg, diameter). Here, the aspect ratio, major axis length, minor axis length, length, and diameter represent the average aspect ratio, average major axis length, average minor axis length, average length, and average diameter. The aspect ratio can be evaluated using a scanning electron microscope.

While embodiments have been described, alternatives, modifications, variations, improvements, and substantial equivalents that are currently unexpected or unforeseeable may be made by the applicant or those of ordinary skill in the art. Thus, it is intended that the appended claims, which may be filed and amended, include all such alternatives, modifications, variations, improvements and substantial equivalents.

"In present disclosure, the term "A is on surface of B" does not exclude embodiments where there are further layers between A and B".

Hereinafter, a cathode according to one or more embodiments, a method of manufacturing the same, and an all-solid-state secondary battery will be described in more detail.

### Cathode mixture

One or more embodiments provides a cathode mixture including a lithium sulfide composite and a solid electrolyte, wherein, in an X-ray diffraction analysis spectrum of the cathode mixture, a first peak that appears (e.g., exists) at a diffraction angle 2θ of about 26° to about 27.5° has a first intensity (I_{A}), a second peak that appears (e.g., exists) at a diffraction angle 2θ of about 30.02° to about 30.06° has a second intensity (Is), and an intensity ratio ((I_{B} /I_{A}) of the second intensity to the first intensity satisfies 1<I_{B} /I_{A}≤2. For example, 1.1≤I_{B}/I_{A}≤1.8, 1.2≤I_{B} /I_{A}≤1.7, 1.3≤I_{B} /I_{A}≤1.6, or 1.35≤I_{B} /I_{A}≤1.5.

In the X-ray diffraction analysis spectrum of the cathode mixture, the first peak that appears (e.g., exists) at a diffraction angle 2θ of about 26° to about 27.5° may have the first intensity (I_{A}), a third peak that appears (e.g., exists) at a diffraction angle 2θ of about 31° to about 33.5° may have a third intensity (Ic), and an intensity ratio (I_{C} /I_{A}) of the third intensity to the first intensity may satisfy 0.5≤I_{C}/I_{A}≤1.5. The third peak may appear at, for example, a diffraction angle 2θ of about 31.2° to about 32.8° or about 31.5° to about 33°.

In one more embodiments, I_{C}/I_{A} may satisfy, for example, 0.6≤I_{C}/I_{A}≤1.3, 0.65≤I_{C}/I_{A}≤1.1, 0.7≤I_{C}/I_{A}≤1.05, 0.75≤I_{C}/I_{A}≤1.0, 0.8≤I_{C}/I_{A}≤1.0, 0.81≤I_{C}/I_{A}≤0.99, 0.83≤I_{C}/I_{A}≤0.98, 0.84≤I_{C}/I_{A}≤0.96, or 0.85≤I_{C}/I_{A}≤0.95.

In the X-ray diffraction analysis spectrum of the cathode mixture, the third peak may appear at a diffraction angle 2θ of about 31° to about 33.5°.

The first peak may appear, for example, at a diffraction angle 2θ of about 26.2° to about 27.3°, about 26.4° to about 27.1°, about 26.6° to about 27°, or 26.71°. The second peak may appear at a diffraction angle 2θ of about 30.02° to about 30.06°, about 30.03° to about 30.06°, about 30.04° to about 30.06°, or 30.05°. The third peak may appear at a diffraction angle 2θ of about 31° to about 33.5°, about 31.1° to about 33°, about 31.3° to about 32.5°, about 31.4° to about 32.5°, or 31.43°.

In the X-ray diffraction analysis spectrum of the cathode mixture, a fourth peak may appear at a diffraction angle 2θ of about 25° to about 25.8°. For example, the fourth peak may appear at a diffraction angle 2θ of about 25.1° to about 25.7°, about 25.1° to about 25.7°, about 25.2° to about 25.6°, or 25.55°.

The first peak may be a peak corresponding to a (111) crystal plane of Li₂S, and the second peak, the third peak, and the fourth peak may each (e.g., all) correspond to a sulfide-based solid electrolyte, and correspond to a (311) crystal plane, a (222) crystal plane, and a (220) crystal plane, respectively.

In the manufacture of a cathode for an all-solid-state secondary battery, the cathode may include a Li₂S cathode active material and a solid electrolyte, and the performance of the cathode may vary depending on a method of mixing the Li₂S cathode active material and the solid electrolyte. The mixing may be performed by mechanical milling, and if (e.g., when) such mechanical milling is utilized, the solid electrolyte may be damaged, thus causing the occurrence of defects in an ion transfer path inside a cathode, and therefore, improvement in this regard may be required.

In the present disclosure, to address the herein described problem, a lithium sulfide composite and a solid electrolyte may be mixed mildly (e.g., mild mixing) to obtain a cathode mixture. The mild mixing may be mortar mixing, thinky mixing, blade mixing, or a combination thereof. The mild mixing may be performed at about 1,000 to about 2,000 rpm, about 1,200 rpm to about 1,800 rpm, or about 1,300 rpm to about 1,500 rpm for about 1 minute to about 5 minutes.

The phrase "mild mixing" as utilized herein is defined as a mixing process in which chemical and physical damage does not occur compared to mechanical milling. As such, if (e.g., when) mild mixing is performed, the solid electrolyte is not damaged, and thus, peaks corresponding to the solid electrolyte are maintained in XRD analysis, and as a result of an XRD analysis spectrum of the cathode mixture, it may be confirmed that peaks showing the properties of the solid electrolyte and the lithium sulfide composite are mixed (e.g., superimposed).

The cathode includes a cathode current collector and a cathode active material layer containing the cathode mixture according to one or more embodiments of the present disclosure on at least one side of the cathode current collector.

The solid electrolyte may contain a crystalline phase. However, as a result of the XRD analysis spectrum of a cathode mixture obtained after mechanical milling, the solid electrolyte containing a crystalline phase may be converted into an amorphous phase, and accordingly, peaks corresponding to the solid electrolyte containing a crystalline phase disappear and only a peak corresponding to the lithium sulfide composite may can be confirmed (e.g., observed).

The lithium sulfide composite may be (e.g., a composite selected from among) a lithium sulfide-carbon-based material composite, a lithium sulfide-Lil-carbon-based material composite, a lithium sulfide-carbon-based material-solid electrolyte composite, a lithium sulfide-lithium salt composite, a lithium sulfide-metal carbide composite, a lithium sulfide-carbon-based material-metal carbide composite, a lithium sulfide-metal nitride composite, a lithium sulfide-carbon-based material-metal nitride composite, a lithium sulfide-solid electrolyte composite, a lithium sulfide (Li₂S)-carbon-based material-lithium salt composite, a lithium sulfide (Li₂S)-lithium salt composite, or (e.g., and/or) a combination thereof (e.g., one or more combinations thereof). A cathode including the lithium sulfide composite described herein may provide improved cycle characteristics and reduced internal resistance by including the lithium sulfide composite and the solid electrolyte as described herein.

The lithium sulfide (Li₂S_-carbon-based material-lithium salt composite may include Li₂S, a carbon-based material, and a lithium salt (e.g., a composite of Li₂S, carbon, and a lithium salt). The carbon-based material is described elsewhere herein. The lithium salt may be a sulfur (S)-free compound. For example, the lithium salt may be a binary compound consisting of lithium and one element selected from Groups 13 to 17 of the Periodic Table of Elements. The binary compound may include, for example, at least one selected from among LiF, LiCl, LiBr, Lil, LiH, Li₂S, Li₂O, Li₂Se, Li₂Te, Li₃N, Li₃P, Li₃As, Li₃Sb, Li₃Al₂, and LiB₃. For example, the lithium salt may be a ternary compound consisting of lithium and two elements selected from Groups 13 to 17 of the Periodic Table of Elements. The ternary compound may include, for example, at least one selected from among Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt may be, for example, at least one lithium halide compound selected from among LiF, LiCl, LiBr, and Lil.

In some embodiments, the preceding composite of Li₂S, carbon, and a lithium salt may be or include, for example, a composite of Li₂S, carbon, and lithium halide. The composite of Li₂S, carbon, and a lithium halide may provide more improved ionic conductivity by including the lithium halide compound. The composite of Li₂S, carbon, and a lithium salt may be distinguished from a simple blend of Li₂S, carbon, and a lithium salt. The simple blend of Li₂S, carbon, and a lithium salt fails to maintain a dense interface between the Li₂S, the carbon, and the lithium salt, thus providing high interfacial resistance, which may result in deteriorated lifespan characteristics of an all-solid-state secondary battery.

The lithium sulfide composite (e.g., Li₂S-lithium salt composite) may include a lithium salt. The lithium salt may refer to lithium salts utilized in the herein-described composite of Li₂S, carbon, and a lithium salt.

The lithium sulfide-carbon-based material composite may include: a core including a lithium-containing sulfide-based cathode active material; and a shell provided along a surface of the core. The shell may include: at least one first metal oxide represented by Formula MₐO_{b} where 0<a≤3 and 0<b<4, and if (e.g., when) a is 1, 2, or 3, b is not an integer); and a first carbon-based material. The first metal oxide may be arranged in a matrix of the first carbon-based material, and Mₐ may be at least one metal selected from Groups 2 to 16 of the Periodic Table of Elements.

The composite (e.g., the lithium sulfide-carbon-based material composite) may include a core and a shell provided continuously or discontinuously along the surface of the core. The shell may cover all or part (e.g., a portion) of the core. The core may include lithium sulfide, and the shell may include the first metal oxide and the first carbon-based material.

Although the lithium sulfide may be an insulator with little electrical conductivity, the composite (e.g., the lithium sulfide-carbon-based material composite) may form an effective conductive network by including the herein-described shell. Thus, if (e.g., when) a cathode including such a cathode active material is utilized, it may be possible to manufacture an all-solid-state secondary battery with improved lifespan characteristics, improved high-rate characteristics, reduced volume expansion of electrode tabs, increased mixture density, and high-energy density characteristics.

In the preparation of a cathode active material, a shell may be provided on a lithium-containing sulfide-based cathode active material core by utilizing a composite including a plurality of first metal oxides provided in a matrix of the first carbon-based material. Thus, the shell may be uniformly provided on the core while preventing or reducing agglomeration of the first carbon-based material. The shell provided on the core may effectively block or reduce the contact between the core and an electrolyte solution.

The first carbon-based material may be, for example, a crystalline carbon-based material. The first carbon-based material may be, for example, a carbon-based nanostructure. The first carbon-based material may be, for example, a two-dimensional carbon-based nanostructure. The first carbon-based material may be, for example, graphene. The shell including graphene and/or a matrix thereof may be flexible, thus easily accommodating a change in the volume of a composite cathode active material during charging and discharging, and thus, the occurrence of cracks inside the composite cathode active material may be suppressed or reduced. Graphene has high electronic conductivity, and thus, the interfacial resistance between the composite cathode active material and an electrolyte may be reduced. Therefore, despite the introduction of the shell including graphene, the internal resistance of an all-solid-state secondary battery may be maintained or reduced. However, existing carbon-based materials easily agglomerate, and thus, it may be difficult to uniformly apply these carbon-based materials onto a lithium transition metal oxide core.

In the cathode, the solid electrolyte may be a sulfide-based solid electrolyte, an oxide-based solid electrolyte, a solid polymer electrolyte, or a combination thereof, and may be, for example, a sulfide-based solid electrolyte. The sulfide-based solid electrolyte may be at least one selected from among Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers and Z is Ge, Zn, or Ga), Li₂S-GeS₂, Li₂S-SiS₂-Li₃PO₄, Li₂S-SiS₂-LiₚMO_{q} (where p and q are positive numbers and M is one of P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The argyrodite-type or kind (e.g., argyrodite) solid electrolyte may include at least one selected from among Li₆PS₅Cl, LisPSsBr, and LisPSsl, and the sulfide-based solid electrolyte may be an argyrodite type or kind and may have a density of about 1.5 gram per cubic centimeter (g/cc) to about 2.0 g/cc.

The amount of the solid electrolyte may be in a range of about 20 parts by weight to about 70 parts by weight, about 25 parts by weight to about 65 parts by weight, about 30 parts by weight to about 60 parts by weight, or about 30 parts by weight to about 50 parts by weight, with respect to 100 parts by weight of a total weight of the lithium sulfide composite and the solid electrolyte.

The solid electrolyte may have an average particle diameter of about 0.1 nanometer (nm) to about 10 micrometer (µm), about 1 nm to about 8 µm, about 10 nm to about 5 µm, or about 100 nm to about 3 µm.

In the lithium sulfide-carbon-based material composite, by including the first carbon-based material and utilizing a composite including a plurality of first metal oxides provided inside the matrix, a substantially uniform shell may be provided on the core while preventing or reducing agglomeration of the first carbon-based material. Thus, by effectively blocking the contact between the core and the electrolyte, side reactions due to the contact between the core and the electrolyte may be effectively prevented or reduced. The first carbon-based material may be, for example, a crystalline carbon-based material. The first carbon-based material may be, for example, a carbon-based nanostructure. The first carbon-based material may be, for example, a two-dimensional carbon-based nanostructure. The first carbon-based material may be, for example, carbon-based flakes. The first carbon-based material may be, for example, graphene.

The shell including graphene and/or a matrix thereof may be flexible, and thus may easily accommodate a change in the volume of the core during charging and discharging. Therefore, the occurrence of cracks on a surface of and/or inside a composite cathode active material during charging and discharging may be suppressed or reduced, and thus, the formation of a solid electrolyte interface (SEI) on the surface of and/or inside the composite cathode active material may be suppressed or reduced. Therefore, the deterioration of a lithium battery including the composite cathode active material may be suppressed or reduced. However, in existing lithium-containing sulfide-based compounds, lithium polysulfide produced by the reaction between lithium ions and sulfur may be dissolved in an electrolyte solution, resulting in reduced capacity and deteriorated lifespan characteristics of a battery.

The lithium sulfide-carbon-based material composite may include a matrix of the first carbon-based material, and in the composite including a plurality of first metal oxides provided inside the matrix, if (e.g., when) the first metal oxides include Al₂O₃, the Al₂O₃ reacts with Li of Li₂S to form a lithium-ion-conductive compound such as LiAlO₂ or LiAlO₄, thereby imparting lithium ion conductivity to the composite cathode active material. As a result, interfacial resistance between the composite and the sulfide-based solid electrolyte in a cathode may be reduced, and the cycle characteristics of an all-solid-state secondary battery may be improved. The Al₂O₃ may suppress or reduce side reactions by adsorbing lithium polysulfide, resulting in improved cycle characteristics. As such, Al₂O₃ has the effect of suppressing the dissolution of lithium polysulfide generated during battery operation. The matrix (e.g., graphene matrix) of the first carbon-based material may impart electronic conductivity to the composite and buffer a change in the volume of the core, and thus may improve the cycle characteristics of an all-solid-state secondary battery.

The first carbon-based material included in the shell of the composite may be derived from a graphene matrix, and thus may have relatively low density and high porosity compared to existing (e.g., comparable) first carbon-based materials derived from graphite-based materials. The first carbon-based material included in the shell of the composite cathode active material may have a d002 interplanar distance of, for example, 3.38 angstrom (Å) or more, 3.40 Å or more, 3.45 Å or more, 3.50 Å or more, 3.60 Å or more, 3.80 Å or more, or 4.00 Å or more. The d002 interplanar distance of the first carbon-based material included in the shell of the composite cathode active material may be in a range of, for example, about 3.38 Å to about 4.0 Å, about 3.38 Å to about 3.8 Å, about 3.38 Å to about 3.6 Å, about 3.38 Å to about 3.5 Å, or about 3.38 Å to about 3.45 Å. However, existing carbon-based materials derived from graphite-based materials may have a d002 interplanar distance of, for example, 3.38 Å or less or about 3.35 Å to about 3.38 Å.

The shell may include, for example, one type or kind of first metal oxide or two or more different types (kinds) of first metal oxide.

As a result, an increase in the internal resistance of an all-solid-state secondary battery including the herein-described cathode active material may be suppressed or reduced, and high-temperature and high-voltage cycle characteristics thereof may be improved.

In the cathode active material, the amount of the composite including a first metal oxide and a first carbon-based material may be in a range of about 25 wt% to about 40 wt% or about 27 wt% to about 40 wt% with respect to 100 wt% of the total weight of the cathode active material. The amount of the first metal oxide in the composite may be in a range of about 60 wt% to about 80 wt%, about 65 wt% to about 80 wt%, or about 70 wt% to about 75 wt%, with respect to 100 wt% of the total weight of the composite. If (e.g., when) the amount of the first metal oxide in the composite is within the described ranges, the lifespan characteristics and capacity characteristics of an all-solid-state secondary battery may be further improved.

The amount of the lithium sulfide in the lithium sulfide-carbon-based material composite may be in a range of about 40 parts by weight to about 65 parts by weight, about 45 parts by weight to about 60 parts by weight, or about 48 parts by weight to about 55 parts by weight, with respect to 100 wt% of the total weight of the composite cathode active material. If (e.g., when) the amount of the lithium sulfide is within the described ranges, the lifespan characteristics and capacity characteristics of an all-solid-state secondary battery may be further improved.

The shell may further include a solid electrolyte. The solid electrolyte may be a sulfide-based solid electrolyte, an oxide-based solid electrolyte, a solid polymer electrolyte, or a combination thereof.

The shell may have a thickness of about 10 nm to about 2 µm, the shell may have a single-layered structure or a multi-layered structure, the shell may be a dry coating layer, and the amount of the shell may be 5 wt% or less with respect to the total weight of the composite cathode active material.

The amount of a first metal included in the shell may be in a range of, for example, greater than 0 at% and up to about 10 at%, about 0.1 at% to about 9.5 at%, about 1 at% to about 9 at%, about 2 at% to about 9 at%, about 3 at% to about 9 at%, about 3 at% to about 8 at%, or about 4 at% to about 8 at%, with respect to the total number of atoms of the shell. If (e.g., when) the shell includes the first metal within the described amount ranges, the cycle characteristics of an all-solid-state secondary battery including the composite cathode active material may be further improved. The amount of the first metal element included in the shell may be obtained from, for example, peaks obtained through measurement of an XPS spectrum of the surface of the composite cathode active material.

The amount of carbon included in the shell may be in a range of, for example, about 80 at% to about 99 at%, about 80 at% to about 95 at%, about 80 at% to about 93 at%, about 80 at% to about 91 at%, or about 83 at% to about 90 at%, with respect to the total number of atoms of the shell. If (e.g., when) the shell includes carbon within the described amount ranges, the cycle characteristics of a lithium battery including the composite cathode active material may be further improved. The amount of carbon included in the shell may be obtained from, for example, peaks obtained through measurement of an X-ray photoelectron spectroscopy (XPS) spectrum of the surface of the composite cathode active material.

A metal included in the first metal oxide may be, for example, at least one selected from among aluminum (Al), niobium (Nb), magnesium (Mg), scandium (Sc), titanium (Ti), zirconium (Zr), vanadium (V), tungsten (W), manganese (Mn), iron (Fe), cobalt (Co), palladium (Pd), copper (Cu), silver (Ag), zinc (Zn), antimony (Sb), silicon (Si), and selenium (Se). The first metal oxide may be, for example, at least one selected from among Al₂O_{z} where 0<z<3, NbOₓ where 0<x<2.5, MgOₓ where 0<x<1, Sc₂O_{z} where 0<z<3), TiO_{y} where 0<y<2, ZrO_{y} where 0<y<2, V₂O_{z} where 0<z<3, WO_{y} where 0<y<2, MnOy where 0<y<2, Fe₂O_{z} where 0<z<3, Co₃O_{w} where 0<w<4, PdOₓ where 0<x<1, CuOₓ where 0<x<1, AgOₓ where 0<x<1, ZnOₓ where 0<x<1, Sb₂O_{z} where 0<z<3, and SeO_{y} where 0<y<2. By positioning such a first metal oxide in the matrix of the first carbon-based material, the uniformity of the shell provided on the core may be improved, and the withstand voltage of the composite cathode active material may be further improved. For example, the shell may include Al₂Oₓ where 0<x<3 as the first metal oxide.

The shell may further include at least one second metal oxide represented by Formula MₐO_{c} where 0<a≤3 and 0<c≤4, and if (e.g., when) a is 1, 2, or 3, c is an integer. Mₐ may be at least one metal selected from Groups 2 to 13, Group 15, and Group 16 of the Periodic Table of Elements. For example, the second metal oxide may include the same metal as the first metal oxide (e.g., Mₐ of the second metal oxide may be or include Mₐ of the first metal oxide). In some embodiments, a ratio (c/a) of c to a in the second metal oxide may be greater than a ratio (b/a) of b to a in the first metal oxide. For example, c/a > b/a. The second metal oxide may be selected from among, for example, Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide may be a reduction product of the second metal oxide. The first metal oxide may be obtained by reducing part or all of the second metal oxide. Thus, the first metal oxide may have a lower oxygen content (e.g., amount) and a lower metal oxidation number than the second metal oxide. For example, the shell may include Al₂Oₓ where 0<x<3 as the first metal oxide and Al₂O₃ as the second metal oxide.

In the composite, for example, the first carbon-based material included in the shell and a transition metal of a lithium transition metal oxide included in the core may be chemically bound through a chemical bond. The carbon atom (C) of the first carbon-based material included in the shell and the transition metal (Me) of the lithium transition metal oxide may be chemically bound through, for example, a C-O-Me bond via oxygen atom (e.g., a C-O-Ni bond or a C-O-Co bond). By chemical bonding through a chemical bond between the first carbon-based material included in the shell and the lithium transition metal oxide included in the core, the core and the shell may form a composite. Thus, the composite may be distinguished from a simple physical blend of the first carbon-based material and the lithium transition metal oxide.

In some embodiments, the first metal oxide and first carbon-based material included in the shell may also be chemically bound through a chemical bond. The chemical bond may be, for example, a covalent bond or an ionic bond. The covalent bond may be, for example, a bond containing at least one selected from among an ester group, an ether group, a carbonyl group, an amide group, a carbonate anhydride group, and an acid anhydride group. The ionic bond may be, for example, a bond containing carboxylic acid ions, ammonium ions, acyl cation groups, and/or the like.

The thickness of the shell may be in a range of, for example, about 1 nm to about 5 µm, about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, or about 1 nm to about 20 nm. If (e.g., when) the thickness of the shell is within the described ranges, an increase in the internal resistance of a lithium battery including the composite cathode active material may be suppressed or reduced.

The composite cathode active material may further include, for example, a third metal doped on the core or a third metal oxide applied onto the core. The shell may be provided on the doped third metal or the applied third metal oxide. For example, the third metal may be doped on the surface of the lithium transition metal oxide included in the core or the third metal oxide may be applied onto the surface of the lithium transition metal oxide, and then the shell may be provided on the third metal and/or the third metal oxide. For example, the composite cathode active material may include: a core; an interlayer provided on the core; and a shell provided on the interlayer, and the interlayer may include a third metal or a third metal oxide. The third metal may be at least one metal selected from among Al, Zr, W, and Co, and the third metal oxide may be Al₂O₃, Li₂O-ZrO₂, WO₂, CoO, Co₂O₃, Co₃O₄, and/or the like.

The shell may include, for example, at least one selected from a composite including a first metal oxide and a first carbon-based material, e.g., graphene, and a milled product of the composite, and the first metal oxide may be provided in the matrix of the first carbon-based material, for example, a graphene matrix. The shell may be prepared from, for example, a composite including a first metal oxide and a first carbon-based material, e.g., graphene. The composite may further include a second metal oxide other than the first metal oxide. The composite may include, for example, at least two first metal oxides. The composite may include, for example, at least two first metal oxides and at least two second metal oxides.

The amount of at least one of the composite and/or the milled product thereof may be 3 wt% or less, 2 wt% or less, 1 wt% or less, 0.5 wt% or less, or 0.2 wt% or less, with respect to the total weight of the composite cathode active material. The amount of at least one of the composite and/or the milled product thereof may be in a range of about 0.01 wt% to about 3 wt%, about 0.01 wt% to about 1 wt%, about 0.01 wt% to about 0.7 wt%, about 0.01 wt% to about 0.5 wt%, about 0.01 wt% to about 0.2 wt%, about 0.01 wt% to about 0.1 wt%, or about 0.03 wt% to about 0.07 wt%, with respect to the total weight of the lithium sulfide-carbon-based material composite. If (e.g., when) the lithium sulfide-carbon-based material composite includes at least one of the composite and milled product thereof within the described amount ranges, the cycle characteristics of a lithium battery including the composite cathode active material may be further improved.

At least one selected from among the first metal oxide and the second metal oxide included in the composite may have an average particle diameter of about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. If (e.g., when) the particle diameter(s) of the first metal oxide and/or the second metal oxide is(are) within the described nanometer ranges, the first metal oxide and/or the second metal oxide may be more uniformly distributed in the matrix of the first carbon-based material of the composite. Thus, the composite may be uniformly applied onto the core without agglomeration, thereby forming a shell. If (e.g., when) the particle diameter(s) of the first metal oxide and/or the second metal oxide is (are) within the described ranges, the first metal oxide and/or the second metal oxide may be more uniformly provided on the core. Thus, by uniformly providing the first metal oxide and/or the second metal oxide on the core, withstand voltage characteristics may be more effectively exhibited.

The average particle diameters of the first metal oxide and the second metal oxide may be measured by utilizing, for example, a measurement apparatus utilizing a laser diffraction method or a dynamic light scattering method. The average particle diameter may be measured by utilizing, for example, a laser scattering particle size distribution analyzer (e.g., LA-920 manufactured by HORIBA, Ltd.), and refers to a median particle diameter (D50) corresponding to a cumulative volume of 50% from the side of the smallest particles in volume conversion.

The uniformity deviation of at least one selected from among the first metal oxide and second metal oxide included in the lithium sulfide-carbon-based material composite may be 3 % or less, 2 % or less, or 1 % or less. The uniformity may be obtained, for example, by XPS. Thus, at least one selected from among the first metal oxide and second metal oxide in the composite may have a uniformity deviation of 3 % or less, 2 % or less, or 1 % or less, and may be uniformly distributed in the composite.

The first carbon-based material included in the composite may have, for example, a branched structure, and at least one metal oxide selected from among the first metal oxide and the second metal oxide may be distributed in the branched structure of the first carbon-based material. The branched structure of the first carbon-based material may include, for example, a plurality of first carbon-based material particles in contact with each other. The first carbon-based material may provide one or more suitable conduction paths by having the branched structure.

The first carbon-based material included in the composite may be, for example, graphene. The graphene may have, for example, a branched structure, and at least one metal oxide selected from among the first metal oxide and the second metal oxide may be distributed in the branched structure. The branched structure of the graphene may include a plurality of graphene particles in contact with each other. The graphene may provide one or more suitable conduction paths by having the branched structure.

The first carbon-based material included in the lithium sulfide-carbon-based material composite may have, for example, a spherical structure, and at least one metal oxide selected from among the first metal oxide and the second metal oxide may be distributed in the spherical structure. The spherical structure of the first carbon-based material may have a size of about 50 nm to about 300 nm. The first carbon-based material having a spherical structure may include a plurality of first carbon-based materials having a spherical structure. Due to the spherical structure of the first carbon-based material, the composite may have a rigid structure.

The first carbon-based material included in the lithium sulfide-carbon-based material composite may be, for example, graphene. The graphene may have, for example, a spherical structure, and at least one metal oxide selected from among the first metal oxide and the second metal oxide may be distributed in the spherical structure. The spherical structure of the graphene may have a size of about 50 nm to about 300 nm. The graphene having a spherical structure may include a plurality of graphene having a spherical structure. Due to the spherical structure of the graphene, the composite may have a rigid structure.

The first carbon-based material included in the composite may have a spiral structure in which a plurality of spherical structures is (e.g., are) connected to each other, and at least one metal oxide selected from among the first metal oxide and the second metal oxide may be distributed in the spherical structures of the spiral structure. The spiral structure of the first carbon-based material may have a size of about 500 nm to about 100 µm. Due to the spiral structure of the first carbon-based material, the composite may have a rigid structure.

The first carbon-based material included in the composite may be, for example, graphene that may have a spiral structure in which a plurality of spherical structures is (e.g., are) connected to each other, and at least one metal oxide selected from among the first metal oxide and the second metal oxide may be distributed in the spherical structures of the spiral structure. The spiral structure of the graphene may have a size of about 500 nm to about 100 µm. Due to the spiral structure of the graphene, the composite may have a rigid structure.

The first carbon-based material included in the composite may have, for example, a cluster structure in which a plurality of spherical structures is (e.g., are) aggregated, and at least one metal oxide selected from among the first metal oxide and the second metal oxide may be distributed in the spherical structures of the cluster structure. The cluster structure of the first carbon-based material may have a size of about 0.5 mm to about 10 cm. Due to the cluster structure of the first carbon-based material, the composite may have a rigid structure.

The first carbon-based material included in the composite may be, for example, graphene that may have, for example, a cluster structure in which a plurality of spherical structures is (e.g., are) aggregated, and at least one metal oxide selected from among the first metal oxide and the second metal oxide may be distributed in the spherical structures of the cluster structure. The cluster structure of the graphene may have a size of about 0.5 mm to about 10 cm. Due to the cluster structure of the graphene, the composite may have a rigid structure.

The composite may be, for example, a crumpled faceted-ball structure, and at least one metal oxide selected from among the first metal oxide and the second metal oxide may be distributed inside the structure or on the surface of the structure. Due to such a faceted-ball structure, the composite may be easily applied onto irregular uneven portions on the surface of the core.

The composite may have, for example, a planar structure, and at least one selected from among the first metal oxide and the second metal oxide may be distributed inside the structure or on the surface of the structure. Due to such a two-dimensional planar structure, the composite may be easily applied onto irregular uneven portions in the surface of the core.

The first carbon-based material included in the composite may extend by a distance of 10 nm or less from the first metal oxide, and may include at least 1 to 20 first carbon-based material layers. For example, by stacking the plurality of first carbon-based material layers, a first carbon-based material having a total thickness of 12 nm or less may be provided on the first metal oxide. For example, the total thickness of the first carbon-based material may be in a range of about 0.6 nm to about 12 nm.

The first carbon-based material included in the composite may be, for example, graphene. The graphene may extend by a distance of 10 nm or less from the first metal oxide, and may include at least 1 to 20 graphene layers. For example, by stacking a plurality of graphene layers, graphene having a total thickness of 12 nm or less may be provided on the first metal oxide. For example, the total thickness of the graphene may be in a range of about 0.6 nm to about 12 nm.

In other embodiments, the size (e.g., diameter) of Li₂S crystallites obtained in an XRD spectrum of the lithium sulfide composite (e.g., the lithium sulfide-LiI-carbon-based material composite) may be less than or equal to about 9.9 nm, and the composite may include a solid solution of Li₂S and Lil.

The size of Li₂S crystallites obtained in the XRD spectrum of the lithium sulfide composite (e.g., the lithium sulfide-LiI-carbon-based material composite) may be, for example, less than about 9.9 nm (e.g., less than 9.9 nm), about 9.85 nm or less, about 9.83 nm or less, about 9.8 nm or less, about 9.5 nm or less, about 9.0 nm or less, or about 8.5 nm or less. The lithium sulfide composite (e.g., the lithium sulfide-LiI-carbon-based material composite) may include a solid solution of Li₂S and Lil. The size of Li₂S crystallites obtained in the XRP spectrum of the lithium sulfide composite (e.g., the lithium sulfide-LiI-carbon-based material composite) may be in a range of, for example, about 1 nm to less than about 9.9 nm, about 1 nm to about 9.8 nm, about 2 nm to about 9.8 nm, about 2 nm to about 9.5 nm, about 2 nm to about 9.0 nm, about 2 nm to about 8.5 nm, or about 3 nm to about 8.5 nm. The lithium sulfide composite (e.g., the lithium sulfide-LiI-carbon-based material composite) may include a solid solution of Li₂S and LiI.

Li₂S may form a composite with Lil and a carbon-based material, and thus, the ionic conductivity and electronic conductivity of Li₂S may be improved concurrently (e.g., simultaneously). The composite as a cathode active material may have improved ionic conductivity by including Lil, and may have improved electronic conductivity by including the carbon-based material, and if (e.g., when) such a cathode is utilized, the internal resistance of an all-solid-state secondary battery may be reduced.

Due to the inclusion of the Li₂S crystallites in the lithium sulfide composite (e.g., the lithium sulfide-LiI-carbon-based material composite) and the size of the Li₂S crystallites being reduced to 21 nm or less, a change in the volume of the Li₂S crystallites during charging and discharging may be reduced, and the contact area between the Li₂S crystallites and Lil and/or the carbon-based material may be further increased. For example, due to a decrease in the size of the Li₂S crystallites, a volume change caused by one Li₂S crystallite may be reduced, resulting in a reduced overall change in the volume of the composite during charging and discharging. For example, the reduced size of the Li₂S crystallites may enable the grain boundary between a plurality of Li₂S crystallites to more easily accommodate a change in volume of the Li₂S crystallites during charging and discharging, and thus, a change in the volume of the composite during charging and discharging may be reduced. The possibility of defects such as cracks due to a change in the volume of the composite during charging and discharging may be reduced. Due to the increased contact area between the Li₂S crystallites and Lil and/or the carbon-based material, the ionic conductivity and/or the electronic conductivity of the composite may be further improved. A secondary battery including a composite cathode active material including such a composite may exhibit improved cycle characteristics. For example, an all-solid-state secondary battery including such a composite cathode active material may exhibit improved lifespan characteristics.

The lithium sulfide composite may have increased ionic conductivity by including a solid solution of Li₂S and Lil. For example, the solid solution of Li₂S and Lil may include alkali metal ions arranged in Li₂S crystallites, and thus, the ionic conductivity of the solid solution of Li₂S and Lil may be improved compared to the ionic conductivity of Li₂S. As a result, the ionic conductivity of the composite may be improved, and the internal resistance of the composite may be reduced. By the inclusion of such a composite in the composite cathode active material, the cycle characteristics of a secondary battery including the composite cathode active material may be improved. For example, the high-rate characteristics of a secondary battery including such a composite cathode active material may be improved.

The Li₂S-LiI-carbon-based material composite may be distinguished from a simple blend of Li₂S, Lil, and a carbon-based material. The simple blend of Li₂S, Lil, and a carbon-based material may provide high interfacial resistance by failing to maintain a dense interface between the Li₂S, the Lil, and the carbon-based material, which may result in deteriorated lifespan characteristics of a secondary battery.

The amount of Lil in the composite may be in a range of 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt%, with respect to the total weight of the composite.

A molar ratio of Li₂S to Lil in the composite may be in a range of, for example, about 50:50 to about 95:5, about 60:40 to about 95:5, about 60:40 to about 90:10, about 65:35 to about 90:10, about 65:35 to about 85:15, or about 70:30 to about 85:15. The molar ratio of Li₂S to Lil in the composite may be in a range of, for example, about 50:50 to about 95:5, about 50:50 to about 90:10, about 50:50 to about 85:15, about 50:50 to about 80:20, about 50:50 to about 75:25, or about 50:50 to about 70:30. If (e.g., when) the amount of Lil and the molar ratio of Li₂S to Lil are within the described ranges, the cycle characteristics of an all-solid-state secondary battery including the cathode active material may be further improved without deterioration of ionic conductivity and energy density.

The composite may include a carbon-based material. The carbon-based material may be, for example, a carbon atom-containing material, and any carbon-based material that may be utilized as a conductive material in the art is possible. The carbon-based material may be, for example, crystalline carbon, amorphous carbon, or a combination thereof. The carbon-based material may be, for example, a fired or sintered product of a carbon precursor. The carbon-based material may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, carbon nanotubes, carbon nanofibers, carbon nanobelts, carbon nanorods, graphene, or a combination thereof. The carbon-based material may be, for example, a porous carbon-based material or a non-porous carbon-based material. The porous carbon-based material may include, for example, periodic and ordered two-dimensional or three-dimensional pores. The porous carbon-based material may be, for example, carbon black such as Ketjen black, acetylene black, Denka black, thermal black, channel black, and/or the like, graphite, activated carbon, or a combination thereof. The carbon-based material may be in the form of, for example, particles, a sheet, a flake, and/or the like, but the present disclosure is not limited thereto and any carbon-based material that may be utilized in the art is possible.

The amount of the carbon-based material included in the composite may be in a range of, for example, about 1 wt% to about 20 wt%, about 5 wt% to about 20 wt%, or about 10 wt% to about 20 wt%, with respect to the total weight of the composite. If (e.g., when) the amount of the carbon-based material is too large, the energy density of a secondary battery may deteriorate. If (e.g., when) the amount of the carbon-based material is too small, the electronic conductivity of the composite may be reduced, resulting in increased internal resistance of the composite cathode active material. As a result, the cycle characteristics of a secondary battery may deteriorate.

In the XRD spectrum of the composite, for example, a first peak that appears (e.g., exists) at a diffraction angle 2θ of 27° ± 2.0° corresponding to a (111) crystal plane of Li₂S may have a first diffraction angle, a second peak that appears (e.g., exists) at a diffraction angle 2θ of 27° ± 2.0° corresponding to a (111) crystal plane of Li₂S in an XRD spectrum of Li₂S utilized in the preparation of the composite may have a second diffraction angle, and the first diffraction angle may be smaller than the second diffraction angle. For example, the position of the first peak may be shifted to a low angle compared to the position of the second peak. Thus, the Li₂S-LiI-carbon-based material composite may have a reduced crystallite size compared to Li₂S utilized in the preparation of the composite. Due to the reduced crystallite size of the Li₂S-LiI-carbon-based material composite, a change in volume of crystallites during charging and discharging may be reduced, and thus, a change in volume of the composite including a plurality of crystallites during charging and discharging may be reduced. The occurrence of defects such as cracks in the composite cathode active material including such a composite during charging and discharging may be suppressed or reduced. As a result, the cycle characteristics of a secondary battery including the composite cathode active material may be improved.

In the XRD spectrum of the composite, for example, the first peak that appears (e.g., exists) at a diffraction angle 2θ of 27° ± 2.0° corresponding to a (111) crystal plane of Li₂S may have a first full width at half maximum (FWHM1), the second peak that appears (e.g., exists) at a diffraction angle 2θ of 27° ± 2.0° corresponding to a (111) crystal plane of Li₂S in an XRD spectrum of Li₂S utilized in the preparation of the composite may have a second full width at half maximum (FWHM2), and the first full width at half maximum may be greater than the second full width at half maximum. Thus, the Li₂S-LiI-carbon-based material composite may have increased lattice strain compared to Li₂S utilized in the preparation of the composite. For example, Li₂S and Lil may form a solid solution, and thus, the Li₂S-LiI-carbon-based material composite may have increased lattice strain. Due to the increased full width at half maximum (FWHM) of the Li₂S-LiI-carbon-based material composite compared to that of Li₂S utilized in the preparation of the composite, the ionic conductivity of the composite cathode active material including the composite may be further improved. A secondary battery including the composite cathode active material may have reduced internal resistance and improved cycle characteristics.

The first full width at half maximum may be, for example, 1 ° or more, 1.05° or more, 1.10° or more, or 1.15° or more. If (e.g., when) the first full width at half maximum (FWHM1) of the composite is within the described ranges, the ionic conductivity of the composite cathode active material including the composite may be further improved. A secondary battery including the composite cathode active material may have reduced internal resistance and improved cycle characteristics.

The particle size of the composite cathode active material, i.e., the size of composite particles, may be, for example, 10 µm or less, 8 µm or less, 5 µm or less, 2 µm or less, 1.5 µm or less, or 1 µm or less. The size of the composite particles may be in a range of, for example, about 1 µm to about 10 µm, about 2 µm to about 10 µm, about 2 µm to about 8 µm, or about 3 µm to about 8 µm. The size of the composite particles may be in a range of, for example, about 0.1 µm to about 10 µm, about 0.1 µm to about 8 µm, about 0.1 µm to about 5 µm, about 0.1 µm to about 2 µm, about 0.1 µm to about 1.5 µm, or about 0.1 µm to about 1 µm. According to one or more embodiments, the cathode mixture comprises composite particles having an average particle diameter of 5 micrometer (µm) or less.

If (e.g., when) the size of the composite particles is within the described ranges, a change in the volume thereof during charging and discharging may be suppressed or reduced, and thus, deterioration of the composite cathode active material including the composite during charging and discharging may be suppressed or reduced. If (e.g., when) the size of the composite particles is too large, the deterioration of the composite cathode active material including the composite may be accelerated due to an increased change in the volume of the composite during charging and discharging. As a result, the cycle characteristics of a secondary battery including such a composite cathode active material may deteriorate.

The size of M₂S particles included in the composite cathode active material, i.e., the size of M₂S particles included in the composite, may be, for example, 2 µm or less, 1.5 µm or less, or 1 µm or less. The size of the M₂S particles may be in a range of, for example, about 0.1 µm to about 2 µm, about 0.1 µm to about 1.5 µm, or about 0.1 µm to about 1 µm. If (e.g., when) the size of the M₂S particles is within the described ranges, a change in the volume thereof during charging and discharging may be suppressed or reduced, and thus, deterioration of the composite cathode active material including the composite during charging and discharging may be suppressed or reduced. If (e.g., when) the size of the M₂S particles is too large, the deterioration of the composite cathode active material including the composite may be accelerated due to an increased change in the volume of the composite during charging and discharging. As a result, the cycle characteristics of a secondary battery including such a composite cathode active material may deteriorate.

Thus, the cycle characteristics, for example, lifespan characteristics of a secondary battery including the cathode active material may be improved. The size of the composite particles, for example, the particle diameter of the composite may be measured, for example, by a laser diffraction method, a scanning electron microscope, and/or the like. The particle diameter of the composite may be, for example, an arithmetic mean value of the particle diameters of a plurality of particles, as measured by utilizing software in a scanning electron microscope image.

The composite may include a carbon-based material, and the carbon-based material may include, for example, a fibrous carbon-based material. The composite may have further improved electronic conductivity by including the fibrous carbon-based material. Due to the fibrous carbon-based material included in the composite, electronic conduction may occur more easily from the surface to the inside of the composite. The internal resistance of the composite cathode active material including the composite may be reduced, and the cycle characteristics of an all-solid-state secondary battery including the composite cathode active material may be further improved.

The aspect ratio of the fibrous carbon-based material may be, for example, 2 or more, 3 or more, 4 or more, 5 or more, 10 or more, or 20 or more. The aspect ratio of the fibrous carbon-based material may be in a range of, for example, about 2 to about 30, about 3 to about 30, about 4 to about 30, about 5 to about 30, about 10 to about 30, or about 20 to about 30. The aspect ratio of the fibrous carbon-based material may be in a range of, for example, about 2 to about 30, about 2 to about 20, about 2 to about 10, about 2 to about 8, about 2 to about 5, or about 2 to about 4. If (e.g., when) the aspect ratio of the fibrous carbon-based material is within the described ranges, the overall electronic conductivity of the composite may be improved, and the imbalance of local electronic conductivity in the composite may be further reduced.

The fibrous carbon-based material may be, for example, a carbon nanostructure. The carbon nanostructure may include, for example, carbon nanofibers (CNFs), carbon nanotubes (CNTs), carbon nanobelts, carbon nanorods, or a combination thereof.

The carbon nanostructure may form a primary carbon nanostructure including (e.g., consisting of) one carbon nanostructure and a secondary carbon nanostructure in which a plurality of carbon nanostructures is (e.g., are) aggregated.

The diameter of the primary carbon nanostructure may be in a range of, for example, about 1 nm to about 200 nm, about 1 nm to about 150 nm, about 1 nm to about 100 nm, about 1 nm to about 50 nm, about 1 nm to about 30 nm, or about 1 nm to about 20 nm. The length of the primary carbon nanostructure may be in a range of, for example, about 10 nm to about 2 µm, about 10 nm to about 1.5 µm, about 10 nm to about 1 µm, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from a scanning electron microscope (SEM) image or a transmission electron microscope (TEM) image. In other embodiments, the diameter and/or length of the primary carbon nanostructure may be measured by a laser diffraction method.

For example, the secondary carbon nanostructure may be a structure formed by assembling primary carbon nanostructures to form a bundle type or kind or rope type or kind in whole or in part. The secondary carbon nanostructure may include, for example, a bundle-type or kind carbon nanostructure, a rope-type or kind carbon nanostructure, or a combination thereof. The diameter of the secondary carbon nanostructure may be in a range of, for example, about 2 nm to about 200 nm, about 3 nm to about 150 nm, about 5 nm to about 100 nm, about 5 nm to about 50 nm, about 5nm to about 30 nm, or about 5 nm to about 20 nm. The length of the secondary carbon nanostructure may be in a range of, for example, about 20 nm to about 2 µm, about 30 nm to about 1.5 µm, about 50 nm to about 1 µm, about 50 nm to about 500 nm, about 50 nm to about 400 nm, about 50 nm to about 300 nm, about 50 nm to about 200 nm, or about 50 nm to about 100 nm. The diameter and length of the secondary carbon nanostructure may be measured from a scanning electron microscope (SEM) image or by utilizing an optical microscope. In other embodiments, the diameter and/or length of the secondary carbon nanostructure may be measured by a laser diffraction method. For example, the secondary carbon nanostructure may be dispersed in a solvent and/or the like to be converted into a primary carbon nanostructure, which may then be utilized in the preparation of the composite.

The composite may include, for example, about 1 part by weight to about 80 parts by weight of Li₂S, about 1 part by weight to about 40 parts by weight of Lil, and about 1 part by weight to about 20 parts by weight of the carbon-based material, with respect to 100 parts by weight of the composite. If (e.g., when) the amounts of M₂S, the alkali metal salt, and the carbon-based material in the composite are within the described ranges, the composite cathode active material including the composite may exhibit excellent or suitable ionic conductivity and/or electronic conductivity.

A cathode according to one or more embodiments may be manufactured by, for example, the following method, but the present disclosure is not limited thereto and the manufacturing method may vary depending on required conditions.

The method may include: mildly mixing a lithium sulfide composite and a solid electrolyte to obtain a cathode mixture; and providing the cathode mixture onto a cathode current collector, followed by drying, to thereby complete the manufacture of a cathode.

The mild mixing may be mortar mixing, thinky mixing, blade mixing, or a combination thereof.

The cathode mixture may further include a binder.

The binder may be, for example, styrene-butadiene rubber (SBR), polytetrafluoroethylene, polyvinylidene fluoride, polyethylene, and/or the like, but the present disclosure is not limited thereto and any binder utilized in the art is possible. The amount of the binder included in a cathode active material layer may be in a range of, for example, about 1 wt% to about 10 wt% with respect to a total weight of the cathode active material layer. In some embodiments, the binder may not be provided.

### Cathode: Binder

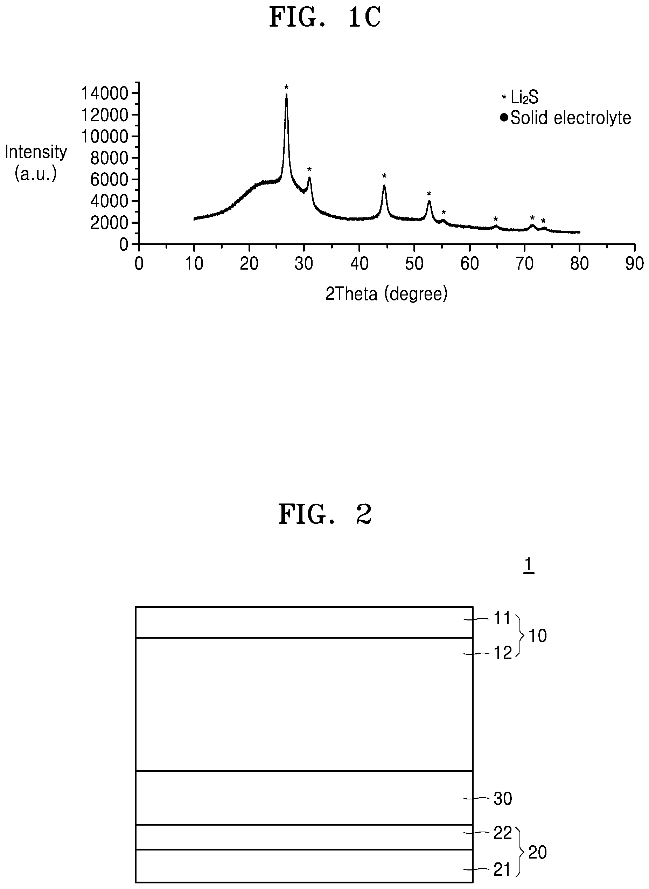

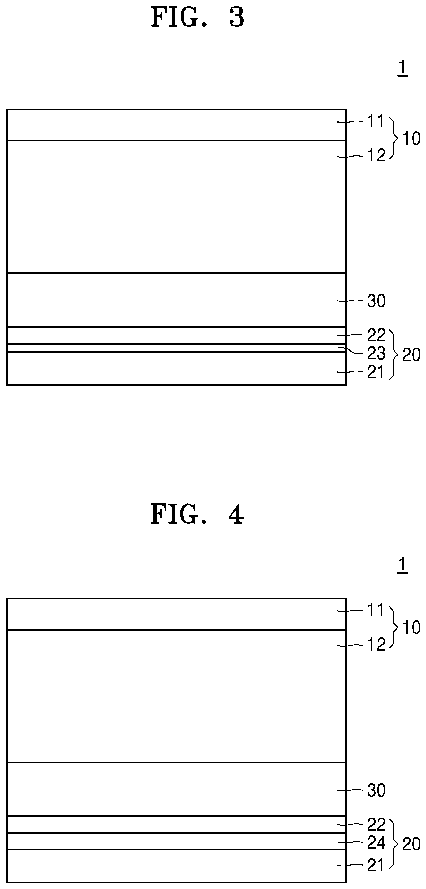

Referring to FIGS. 2 to 6, a cathode active material layer 12 may further include a binder. The binder may be, for example, styrene-butadiene rubber (SBR), polytetrafluoroethylene, polyvinylidene fluoride, polyethylene, and/or the like, but the present disclosure is not limited thereto and any binder utilized in the art is possible. The amount of the binder included in the cathode active material layer 12 may be in a range of, for example, about 1 wt% to about 10 wt% with respect to a total weight of the cathode active material layer 12. In some embodiments, the binder may not be provided (e.g., be excluded).

### Cathode: Other additives

The cathode active material layer 12 may further include, for example, additives such as a filler, a coating agent, a dispersant, an ion-conductive adjuvant, and/or the like, in addition to the cathode active material, the solid electrolyte, the binder, and the conductive material as described herein.

As the filler, the coating agent, the dispersant, the ion-conductive adjuvant, and/or the like that may be included in the cathode active material layer 12, suitable materials generally utilized in electrodes of all-solid-state secondary batteries may be utilized.

### Cathode: Cathode current collector

A cathode current collector 11 may include or be made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or any alloy thereof in the form of a plate, foil, and/or the like. The cathode current collector 11 may not be provided. The thickness of the cathode current collector 11 may be in a range of, for example, about 1 µm to about 100 µm, about 1 µm to about 50 µm, about 5 µm to about 25 µm, or about 10 µm to about 20 µm.

The cathode current collector 11 may include, for example, a base film and a metal layer on at least one side (e.g., on both (e.g., simultaneously) sides) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. By the inclusion of an insulating thermoplastic polymer, if (e.g., when) a short circuit occurs, the base film softens or liquefies, thus blocking battery operation and allowing a rapid increase in current to be suppressed or reduced. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and break in case of overcurrent, thus performing a short-circuit prevention function. The limit current and the maximum current may be adjusted by adjusting the thickness of the metal layer. The metal layer may be plated or deposited on the base film. If (e.g., when) the thickness of the metal layer is reduced, the limit current and/or the maximum current of the cathode current collector 11 may be reduced, and thus, the stability of a lithium battery in the event of short circuit may be improved. A lead tab may be added on the metal layer for connection to the outside. The lead tab may be welded to the metal layer or a metal layer/base film stack by ultrasonic welding, laser welding, spot welding, and/or the like. The metal layer may be electrically connected to the lead tab while the base film and/or the metal layer is melted during welding. To make welding between the metal layer and the lead tab more rigid, a metal chip may be added between the metal layer and the lead tab. The metal chip may be foil of the same material as a metal of the metal layer. The metal chip may be, for example, metal foil or metal mesh. The metal chip may be, for example, aluminum foil, copper foil, SUS foil, and/or the like. The lead tab may be welded to a metal chip/metal layer stack or a metal chip/metal layer/base film stack by welding to the lead tab after the metal chip is provided on the metal layer. The metal layer or the metal layer/metal chip stack may be electrically connected to the lead tab while the base film, the metal layer, and/or the metal chip are melted during welding. A metal chip and/or a lead tab may be added on a portion of the metal layer. The base film may have a thickness of, for example, about 1 µm to about 50 µm, about 1.5 µm to about 50 µm, about 1.5 µm to about 40 µm, or about 1 µm to about 30 µm. If (e.g., when) the thickness of the base film is within the described ranges, the weight of an electrode assembly may be more effectively reduced. The base film may have a melting point of, for example, about 100 °C to about 300 °C, about 100 °C to about 250 °C, or about 100 °C to about 200 °C. If (e.g., when) the melting point of the base film is within the described ranges, the base film may be melted and easily coupled to the lead tab in the lead tab welding process. Surface treatment such as corona treatment may be performed on the base film to improve the adhesion between the base film and the metal layer. The metal layer may have a thickness of, for example, about 0.01 µm to about 3 µm, about 0.1 µm to about 3 µm, about 0.1 µm to about 2 µm, or about 0.1 µm to about 1 µm. If (e.g., when) the thickness of the metal layer is within the described ranges, the stability of an electrode assembly may be secured while maintaining conductivity. The metal chip may have a thickness of, for example, about 2 µm to about 10 µm, about 2 µm to about 7 µm, or about 4 µm to about 6 µm. If (e.g., when) the thickness of the metal chip is within the described ranges, connection between the metal layer and the lead tab may be more facilitated. If (e.g., when) the cathode current collector 11 has this structure, the weight of the cathode may be reduced, resulting in improved energy density of the cathode and a lithium battery.

### Cathode: Inactive member

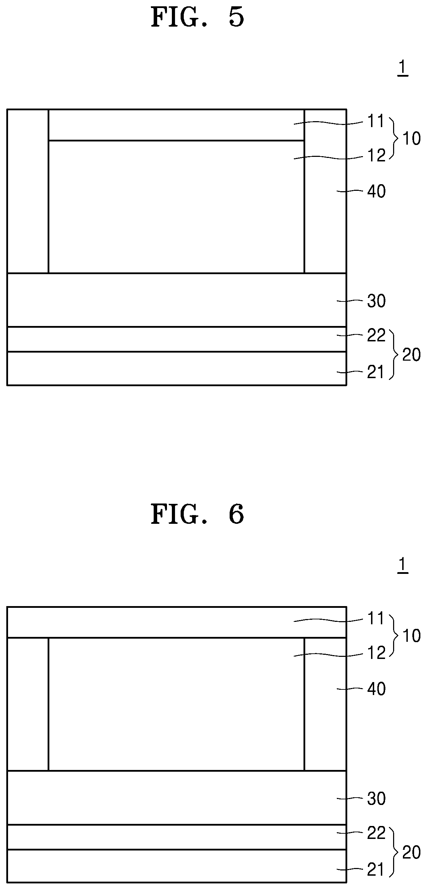

Referring to FIGS. 5 and 6, a cathode 10 includes the cathode current collector 11, and the cathode active material layer 12 provided on one side of the cathode current collector 11. An inactive member 40 may be provided on a side surface of the cathode 10. Referring to FIG. 5, the inactive member 40 may be provided on side surfaces of the cathode active material layer 12 and the cathode current collector 11. Referring to FIG. 6, the inactive member 40 may be arranged on a side surface of the cathode active material layer 12 and provided between a solid electrolyte layer 30 and the cathode current collector 11 facing the electrolyte layer 30. The inactive member 40 may not be arranged on a side surface of the cathode current collector 11. The electrolyte layer 30 may be, for example, a solid electrolyte layer.

Due to including the inactive member 40, the occurrence of cracks in the electrolyte layer 30 may be prevented or reduced during manufacturing and/or charging and discharging of an all-solid-state secondary battery 1, resulting in improved cycle characteristics of the all-solid-state secondary battery 1. In the all-solid-state secondary battery 1 not including the inactive member 40, uneven pressure may be applied to the electrolyte layer 30 in contact with the cathode 10 during manufacturing and/or charging and discharging of the all-solid-state secondary battery 1, and thus, cracks occur in the electrolyte layer 30 and lithium metal grows through this, resulting in an increased possibility of a short circuit.

In the all-solid-state secondary battery 1, the thickness of the inactive member 40 may be greater than or equal to the thickness of the cathode active material layer 12. In other embodiments, in the all-solid-state secondary battery 1, the thickness of the inactive member 40 may be substantially the same as the thickness of the cathode 10. Thus, substantially uniform pressure may be applied between the cathode 10 and the electrolyte layer 30, and the cathode 10 and the electrolyte layer 30 may be sufficiently in close contact with each other, and thus, the interfacial resistance between the cathode 10 and the electrolyte layer 30 may be reduced. In some embodiments, the electrolyte layer 30 may be sufficiently sintered during manufacturing of the all-solid-state secondary battery 1 by pressing, and thus, the internal resistance of the electrolyte layer 30 and the all-solid-state secondary battery 1 including the same may be reduced.

The inactive member 40 may contact the electrolyte layer 30 while around (e.g., surrounding) a side surface of the cathode 10. Thus, cracks in the electrolyte layer 30, caused by a pressure difference during a pressing process in the electrolyte layer 30 that is not in contact with the cathode 20, may be effectively suppressed or reduced. The inactive member 40 may surround a side surface of the cathode 10 and may be separated from the anode 20, for example, a first anode active material layer 22. The inactive member 40 may surround a side surface of the cathode 10 and contact the electrolyte layer 30, and may be separated from the anode 20. Thus, the possibility of a short circuit that occurs by physical contact between the cathode 10 and the first anode active material layer 22, overcharging of lithium, and/or the like may be suppressed or reduced. For example, the inactive member 40 may be arranged on a side surface of the cathode active material layer 12 and at the same time, may be arranged on a side surface of the cathode current collector 11, and thus, the possibility of a short circuit that occurs by contact between the cathode current collector 11 and the anode 20 may be more effectively suppressed or reduced.

Referring to FIGS. 5 and 6, the inactive member 40 may extend from a side surface of the cathode 10 to an end portion of the electrolyte layer 30. Due to the configuration in which the inactive member 40 extends to the end portion of the electrolyte layer 30, the occurrence of cracks in the end portion of the electrolyte layer 30 may be suppressed or reduced. The end portion of the electrolyte layer 30 may be the outermost portion in contact with a side surface of the electrolyte layer 30. The inactive member 40 may extend to the outermost portion in contact with the side surface of the electrolyte layer 30. The inactive member 40 may be separated from an anode 20, for example, the first anode active material layer 22. The inactive member 40 may extend to the end portion of the electrolyte layer 30, but may not contact the anode 20. For example, the inactive member 40 may fill a space extending from a side surface of the cathode 10 to the end portion of the electrolyte layer 30.

Referring to FIGS. 5 and 6, the width of the inactive member 40 extending from the side surface of the cathode 10 to the end portion of the electrolyte layer 30 may be in a range of, for example, about 1 % to about 30 %, about 1 % to about 25 %, about 1 % to about 20 %, about 1 % to about 15 %, about 1 % to about 10 %, or about 1 % to about 5 % of the width between a side surface of the cathode 10 and another side surface thereof facing the side surface. If (e.g., when) the width of the inactive member 40 is too large, the energy density of the secondary battery 1 may be reduced. If (e.g., when) the width of the inactive member 40 is too small, the effect of disposing the inactive member 40 may be insignificant.

The area of the cathode 10 may be smaller than the area of the electrolyte layer 30 in contact with the cathode 10. The inactive member 40 may be arranged to surround a side surface of the cathode 10, to compensate for the difference in area between the cathode 10 and the electrolyte layer 30. The area of the inactive member 40 compensates for the difference between the area of the cathode 10 and the area of the electrolyte layer 30, and thus, the occurrence of cracks in electrolyte layer 30 due to a pressure difference during a pressing process may be effectively suppressed or reduced. For example, a sum of the area of the cathode 10 and the area of the inactive member 40 may be equal to the area of the electrolyte layer 30. The electrolyte layer 30 may be, for example, a solid electrolyte layer.

The area of the cathode 10 may be, for example, less than 100 %, 99 % or less, 98 % or less, 97 % or less, 96 % or less, or 95 % or less of the area of the electrolyte layer 30. The area of the cathode 10 may be in a range of, for example, at least about 50 % and less than 100 %, about 50 % to about 99 %, about 55 % to about 98 %, about 60 % to about 97 %, about 70 % to about 96 %, about 80 % to about 95 %, or about 85 % to about 95 % of the area of the electrolyte layer 30.

If (e.g., when) the area of the cathode 10 is equal to or greater than the area of the electrolyte layer 30, the possibility of a short circuit that occurs by physical contact between the cathode 10 and the first anode active material layer 22, overcharging of lithium, and/or the like may increase. For example, the area of the cathode 10 may be equal to the area of the cathode active material layer 12. For example, the area of the cathode 10 may be equal to the area of the cathode current collector 11.

The area of the inactive member 40 may be, for example, 50 % or less, 40 % or less, 30 % or less, 20 % or less, or 10 % or less of the area of the cathode 10. The area of the inactive member 40 may be in a range of, for example, about 1 % to about 50 %, about 5 % to about 40 %, about 5 % to about 30 %, about 5 % to about 20 %, or about 5 % to about 15 % of the area of the cathode 10.

An area S1 of the cathode 10 may be smaller than an area S4 of an anode current collector 21. The area S1 of the cathode 10 may be, for example, less than 100 %, 99 % or less, 98 % or less, 97 % or less, 96 % or less, or 95 % or less of the area S4 of the anode current collector 21. The area S1 of the cathode 10 may be in a range of, for example, at least about 50 % and less than about 100 %, about 50 % to about 99 %, about 55 % to about 98 %, about 60 % to about 97 %, about 70 % to about 96 %, about 80 % to about 95 %, or about 85 % to about 95 % of the area S4 of the anode current collector 21. The area S4 of the anode current collector 21 may be equal to, for example, the area of the anode 20. The area S4 of the anode current collector 21 may be equal to, for example, the area of the first anode active material layer 22.

In the present disclosure, the "same" area, length, width, thickness and/or shape is intended to exclude cases of having a different area, length, width, thickness and/or shape and include all the cases of having "substantially the same" area, length, width, thickness and/or shape. The "same" area, length, width and/or thickness refers to that the unintentional difference in area, length, width, and/or thickness between objects to be compared is in a range of, for example, less than 3 %, less than 2 %, less than 1 %, less than 0.5 %, or less than 0.1 %.

For example, the thickness of the inactive member 40 may be greater than the thickness of the first anode active material layer 22. The thickness of the first anode active material layer 22 may be, for example, 50% or less, 40% or less, 30% or less, 20% or less, or 10% or less of the thickness of the inactive member 40. The thickness of the first anode active material layer 22 may be in a range of, for example, about 1 % to about 50 %, about 1 % to about 40 %, about 1 % to about 30 %, about 1 % to about 20 %, or about 1 % to about 10 % of the thickness of the inactive member 40.

The inactive member 40 may be a gasket. By utilizing a gasket as the inactive member 40, the occurrence of cracks in the electrolyte layer 30 due to a pressure difference during a pressing process may be effectively suppressed or reduced.

The inactive member 40 may have, for example, a single-layered structure. In other embodiments, although not shown in the drawings, the inactive member 40 may have a multi-layered structure. In the inactive member 40 having a multi-layered structure, respective layers may have different compositions. The inactive member having a multi-layered structure may have, for example, a two-layered structure, a three-layered structure, a four-layered structure, or a five-layered structure. The inactive member 40 having a multi-layered structure may include, for example, at least one adhesive layer and at least one support layer. For example, the adhesive layer may effectively prevent or reduce separation between the cathode 10 and the electrolyte layer 30, and/or the like caused by a change in the volume of the cathode 10 occurring during charging and discharging processes of the all-solid-state secondary battery 1, and may provide the adhesion between the support layer and other layers, thus improving the film strength of the inactive member 40. The support layer may provide support strength to the inactive member 40, prevent or reduce uneven pressure applied to the electrolyte layer 30 during a pressing process or charging and discharging processes, and prevent or reduce the all-solid-state secondary battery 1 from being deformed.

The inactive member 40 may be, for example, a flame-retardant inactive member. Due to flame retardancy provided by the flame-retardant inactive member, the possibility of thermal runaway and ignition of the all-solid-state secondary battery 1 may be prevented or reduced. As a result, the safety of the all-solid-state secondary battery 1 may be further improved. The flame-retardant inactive member may prevent or reduce the deterioration of the all-solid-state secondary battery 1 by absorbing residual moisture in the all-solid-state secondary battery 1, resulting in improved lifespan characteristics of the all-solid-state secondary battery 1.

The flame-retardant inactive member may include, for example, a matrix and a filler. The matrix may include, for example, a substrate and a reinforcing material. The matrix may include, for example, a fibrous substrate and a fibrous reinforcing material. The matrix may have elasticity by including the substrate. Thus, the matrix may effectively accommodate volume changes during charging and discharging of the all-solid-state secondary battery 1 and may be provided in one or more suitable positions. The substrate included in the matrix may include, for example, a first fibrous material. By including the first fibrous material, the substrate may effectively accommodate a change in the volume of the cathode 10 occurring during charging and discharging processes of the all-solid-state secondary battery 1, and deformation in the inactive member 40 due to a change in the volume of the cathode 10 may be effectively suppressed or reduced. The first fibrous material may be, for example, a material having an aspect ratio of 5 or more, 20 or more, or 50 or more. The first fibrous material may be, for example, a material having an aspect ratio of about 5 to about 1,000, about 20 to about 1,000, or about 50 to about 1,000. The first fibrous material may be, for example, an insulating material. If (e.g., when) the first fibrous material is an insulating material, a short circuit between the cathode 10 and the anode 20 caused by lithium dendrites and/or the like that occur during charging and discharging processes of the all-solid-state secondary battery 1 may be effectively prevented or reduced. The first fibrous material may include, for example, at least one selected from among pulp fibers, insulating polymer fibers, and ion-conducting polymer fibers. The matrix may have improved strength by including the reinforcing material. Thus, the matrix may prevent or reduce excessive volume changes during charging and discharging of the all-solid-state secondary battery 1 and prevent or reduce deformation of the all-solid-state secondary battery 1. The reinforcing material included in the matrix may include, for example, a second fibrous material. By including the second fibrous material in the reinforcing material, the strength of the matrix may be more uniformly increased. The second fibrous material may be, for example, a material having an aspect ratio of 3 or more, 5 or more, or 10 or more. The first fibrous material may be, for example, a material having an aspect ratio of about 3 to about 100, about 5 to about 100, or about 10 to about 100. The second fibrous material may be, for example, a flame-retardant material. If (e.g., when) the second fibrous material is a flame-retardant material, ignition due to thermal runaway that occurs during processes of charging and discharging of the all-solid-state secondary battery 1 or occurs due to external shock may be effectively suppressed or reduced. The second fibrous material may be, for example, glass fiber, metal oxide fiber, ceramic fiber, and/or the like.

The flame-retardant inactive member may include a filler, in addition to the matrix. The filler may be provided inside the matrix, on a surface of the matrix, or both (e.g., simultaneously) inside and on the surface of the matrix. The filler may be, for example, an inorganic material. The filler included in the flame-retardant inactive member may be, for example, a moisture getter. The filler may be to absorb moisture at a temperature of, for example, less than 100 °C, thereby removing moisture remaining in the all-solid-state secondary battery 1, and thus, the deterioration of the all-solid-state secondary battery 1 may be prevented or reduced. In other embodiments, if (e.g., when) the temperature of the all-solid-state secondary battery 1 is raised to 150 °C or higher due to thermal runaway that occurs during charging and discharging processes of the all-solid-state secondary battery 1 or occurs due to external shock, the filler may release the absorbed moisture, and thus, ignition of the all-solid-state secondary battery 1 may be effectively suppressed or reduced. The filler may be, for example, a flame retardant. For example, the filler may be a metal hydroxide having hygroscopic properties. Examples of the metal hydroxide included in the filler may include Mg(OH)₂, Fe(OH)₃, Sb(OH)₃, Sn(OH)₄, Tl(OH)₃, Zr(OH)₄, Al(OH)₃, or a combination thereof. The amount of the filler included in the flame-retardant inactive member may be in a range of, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, with respect to 100 parts by weight of the flame-retardant inactive member 40.

The flame-retardant inactive member may further include, for example, a binder. The binder may include, for example, a curable polymer or a non-curable polymer. The curable polymer may be a polymer that may be (e.g., gets) cured by heat and/or pressure. For example, the curable polymer may be solid at room temperature. Examples of the flame-retardant inactive member 40 may include a heat-press curable film and/or a cured product thereof. The heat-press curable film may be, for example, TSA-66 manufactured by Toray.

The flame-retardant inactive member 40 may further include other materials, in addition to the herein-described substrate, reinforcing material, filler, and binder. For example, the flame-retardant inactive member may further include at least one selected from among paper, an insulating polymer, an ion conductive polymer, an insulating inorganic material, an oxide-based solid electrolyte, and a sulfide-based solid electrolyte. The insulating polymer may be, for example, an olefin-based polymer such as polypropylene (PP) or polyethylene (PE).

The density of the substrate or reinforcing material included in the flame-retardant inactive member may be in a range of, for example, about 10 % to about 300 %, about 10 % to about 150 %, about 10 % to about 140 %, about 10 % to about 130 %, or about 10 % to about 120 % of the density of the cathode active material included in the cathode active material layer 12.

The inactive member 40 may be a member that does not include an electrochemically active material, for example, an electrode active material. The electrode active material may be a material capable of absorbing/desorbing lithium. The inactive member 40 may be a member formed of any material utilized in the art that is not an electrode active material.

### Anode

### Anode: Anode active material

Referring to FIGS. 2 to 6, the anode 20 includes the first anode active material layer 22. The first anode active material layer 22 may include, for example, an anode active material and a binder.

The anode active material included in the first anode active material layer 22 may be, for example, an anode material capable of forming an alloy or compound with lithium.

The anode active material included in the first anode active material layer 22 may have, for example, a particle form. The average particle diameter of the anode active material in particle form may be, for example, 4 µm or less, 3 µm or less, 2 µm or less, 1 µm or less, 500 nm or less, 300 nm or less, or 100 nm or less. The average particle diameter of the anode active material in particle form may be in a range of, for example, about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. If (e.g., when) the average particle diameter of the anode active material is within the described ranges, reversible absorption and/or desorption of lithium during charging and discharging may be more easily facilitated. The average particle diameter of the anode active material may be, for example, a median diameter (D50) measured by utilizing a laser particle size distribution analyzer.

The anode active material included in the first anode active material layer 22 may include, for example, at least one selected from among a carbon-based anode active material and a metal or metalloid anode active material.

The carbon-based anode active material may include, for example, amorphous carbon, crystalline carbon, porous carbon, or a combination thereof.

The carbon-based anode active material may be, for example, amorphous carbon. The amorphous carbon may be, for example, carbon black (CB), acetylene black (AB), furnace black (FB), Ketjen black (KB), or graphene. However, the present disclosure is not limited thereto and any carbon that is classified as amorphous carbon in the art is possible. Amorphous carbon may be carbon that does not have crystallinity or has very low crystallinity and may be distinguished from crystalline carbon or graphitic carbon.

The carbon-based anode active material may be, for example, porous carbon. The pore volume of the porous carbon may be in a range of, for example, about 0.1 cubic centimeter per gram (cc/g) to about 10.0 cc/g, about 0.5 cc/g to about 5 cc/g, or about 0.1 cc/g to about 1 cc/g. The average pore diameter of the porous carbon may be in a range of, for example, about 1 nm to about 50 nm, about 1 nm to about 30 nm, or about 1 nm to about 10 nm. The BET specific surface area of the porous carbon may be in a range of, for example, about 100 square meter per gram (m²/g) to about 3,000 m²/g. The BET specific surface area of the porous carbon may be measured, for example, in accordance with ISO 9277:2022.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn). However, the present disclosure is not limited thereto and any metal anode active material or metalloid anode active material that forms an alloy or compound with lithium utilized in the art is possible. For example, nickel (Ni) does not form an alloy with lithium, and thus is not a metal anode active material.

The first anode active material layer 22 may include one of these anode active materials, or a mixture of a plurality of different anode active materials. For example, the first anode active material layer 22 may include amorphous carbon alone, or may include at least one selected from among gold (Au), platinum (Pt), palladium (Pd), silicon (Si), silver (Ag), aluminum (Al), bismuth (Bi), tin (Sn), and zinc (Zn). In other embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture of amorphous carbon and gold and/or the like may be in a range of, for example, about 99:1 to about 1:99, about 10:1 to about 1:2, about 5:1 to about 1:1, or about 4:1 to about 2:1. However, the present disclosure is not limited thereto and the mixing ratio may be selected depending on the required characteristics of the all-solid-state secondary battery 1. If (e.g., when) the anode active material has this composition, the cycle characteristics of the all-solid-state secondary battery 1 may be further improved.

The anode active material included in the first anode active material layer 22 may include, for example, a mixture of primary particles consisting of amorphous carbon and secondary particles consisting of a metal or a metalloid. The metal or the metalloid may include, for example, at least one selected from among gold (Au), platinum (Pt), palladium (Pd), silicon (Si), silver (Ag), aluminum (Al), bismuth (Bi), tin (Sn), and zinc (Zn). In other embodiments, the metalloid may be a semiconductor. The amount of the secondary particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to a total weight of the mixture. If (e.g., when) the amount of the secondary particles is within the described ranges, for example, the cycle characteristics of the all-solid-state secondary battery 1 may be further improved.

In other embodiments, the first anode active material layer 22 may include a composite anode active material. The composite anode active material may include, for example, a carbon-based support and a metal-based anode active material supported on the carbon-based support. If (e.g., when) the composite anode active material has such a structure, localization of the metal-based anode active material in the first anode active material layer may be prevented or reduced and substantially uniform distribution thereof may be obtained. As a result, the cycle characteristics of the all-solid-state secondary battery 1 including the first anode active material layer 22 may be further improved.

The metal-based anode active material supported on the carbon-based support may include, for example, a metal, a metal oxide, a composite of a metal and a metal oxide, or a combination thereof. Non-limiting examples of the metal may include gold (Au), platinum (Pt), palladium (Pd), silicon (Si), silver (Ag), aluminum (Al), bismuth (Bi), tin (Sn), tellurium (Te), and zinc (Zn). Non-limiting examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} where 0<x≤2 and 0<y≤3, PtₓO_{y} where 0<x≤1 and 0<y≤2, PdₓO_{y} where 0<x≤1 and 0<y≤1, SiₓO_{y} where 0<x≤1 and 0<y≤2, AgₓO_{y} where 0<x≤2 and 0<y≤1, AlₓO_{y} where 0<x≤2 and 0<y≤3, BiₓO_{y} where 0<x≤2 and 0<y≤3, SnₓO_{y} where 0<x≤1 and 0<y≤2, TeₓO_{y} where 0<x≤1 and 0<y≤3, ZnₓO_{y} where 0<x≤1 and 0<y≤1, or a combination thereof. The composite of a metal and a metal oxide may include, for example, a composite of Au and AuₓO_{y} where 0<x≤2 and 0<y≤3, a composite of Pt and PtₓO_{y} where 0<x≤1 and 0<y≤2, a composite of Pd and PdₓO_{y} where 0<x≤1 and 0<y≤1, a composite of Si and SiₓO_{y} where 0<x≤1 and 0<y≤2, a composite of Ag and AgₓO_{y} where 0<x≤2 and 0<y≤1, a composite of Al and AlₓO_{y} where 0<x≤2 and 0<y≤3, a composite of Bi and BiₓO_{y} where 0<x≤2 and 0<y≤3, a composite of Sn and SnₓO_{y} where 0<x≤1 and 0<y≤2, a composite of Te and TeₓO_{y} where 0<x≤1 and 0<y≤3, a composite of Zn and ZnₓO_{y} where 0<x≤1 and 0<y≤1, or a combination thereof.

The carbon-based support may be, for example, amorphous carbon. The amorphous carbon may be, for example, carbon black (CB), acetylene black (AB), furnace black (FB), Ketjen black (KB), graphene, activated carbon, carbon nanofibers (CNFs), or carbon nanotubes (CNTs). However, the present disclosure is not limited thereto and any carbon that is classified as amorphous carbon in the art is possible. Amorphous carbon may be carbon that does not have crystallinity or has very low crystallinity and may be distinguished from crystalline carbon or graphitic carbon. The carbon-based material may be, for example, a carbon-based anode active material.

The composite anode active material may have, for example, a particle form. The particle diameter of the composite anode active material in particle form may be in a range of, for example, about 10 nm to about 4 µm, about 10 nm to about 1 µm, about 10 nm to about 500 nm, about 10 nm to about 200 nm, or about 10 nm to about 100 nm. If (e.g., when) the particle diameter of the composite anode active material is within the described ranges, reversible absorption and/or desorption of lithium during charging and discharging may be more facilitated. The metal-based anode active material supported on the support may have, for example, a particle form. The particle diameter of the metal-based anode active material may be in a range of, for example, about 1 nm to about 200 nm, about 1 nm to about 150 nm, about 5 nm to about 100 nm, or about 10 nm to about 50 nm. The carbon-based support may have, for example, a particle form. The particle diameter of the carbon-based support may be in a range of, for example, about 10 nm to about 2 µm, about 10 nm to about 1 µm, about 10 nm to about 500 nm, about 10 nm to about 200 nm, or about 10 nm to about 100 nm. If (e.g., when) the particle diameter of the carbon-based support is within the described ranges, the carbon-based support may be more uniformly arranged in the first anode active material layer. The carbon-based support may be, for example, nanoparticles having a particle diameter of 500 nm or less. The particle diameter of the composite anode active material, the particle diameter of the metal-based anode active material, and the particle diameter of the carbon-based support may be, for example, average particle diameters. The average particle diameter may be, for example, a median diameter (D50) measured by utilizing a laser particle size distribution analyzer. In other embodiments, the average particle diameter may be, for example, determined automatically by utilizing software from an electron microscope image, or may be determined manually by manual methods.

### Anode: Binder

The binder included in the first anode active material layer 22 may be, for example, styrene-butadiene rubber (SBR), polytetrafluoroethylene, polyvinylidene fluoride, polyethylene, a vinylidene fluoride/hexafluoropropylene copolymer, polyacrylonitrile, or polymethyl methacrylate. However, the present disclosure is not limited thereto and any binder utilized in the art is possible. The binder may be a binder alone or a plurality of different binders.

By including the binder, the first anode active material layer 22 may be stabilized on the anode current collector 21. In other embodiments, despite a change in the volume and/or relative position of the first anode active material layer 22 during charging and discharging processes, the occurrence of cracks in the first anode active material layer 22 may be suppressed or reduced. For example, if (e.g., when) the first anode active material layer 22 does not include a binder, the first anode active material layer 22 may be easily separated from the anode current collector 21. Due to separation of the first anode active material layer 22 from the anode current collector 21, the anode current collector 21 may contact the electrolyte layer 30 in an exposed portion thereof, and thus, a possibility of the occurrence of a short circuit may increase. The first anode active material layer 22 may be prepared by, for example, applying a slurry, in which materials constituting the first anode active material layer 22 are dispersed, onto the anode current collector 21 and drying the slurry. By including the binder in the first anode active material layer 22, the anode active material may be stably dispersed in the slurry. For example, if (e.g., when) the slurry is applied onto the anode current collector 21 by screen printing, it may be possible to suppress or reduce clogging of a screen (for example, clogging by aggregates of the anode active material).

### Anode: Other additives

The first anode active material layer 22 may further include, for example, additives utilized in existing all-solid-state secondary batteries, such as a filler, a coating agent, a dispersant, and an ion-conductive adjuvant.

### Anode: Solid electrolyte

The first anode active material layer 22 may further include a solid electrolyte. The solid electrolyte may be, for example, a material selected from solid electrolytes included in the solid electrolyte layer 30. The solid electrolyte included in the first anode active material layer 22 may serve as a reaction point where the formation of lithium metal starts in the first anode active material layer 22, serve as a space where the formed lithium metal is stored, or serve as a path for the transfer of lithium ions. The solid electrolyte may not be provided.

In the first anode active material layer 22, for example, the amount of the solid electrolyte may be large in an area adjacent to the electrolyte layer 30 and small in an area adjacent to the anode current collector 21. In the first anode active material layer 22, the solid electrolyte may have, for example, a concentration gradient in which the concentration decreases from the area adjacent to the electrolyte layer 30 to the area adjacent to the anode current collector 21.

### Anode: First anode active material layer

A ratio B/A of an initial charge capacity B of the first anode active material layer 22 to an initial charge capacity A of the cathode active material layer 12 may be in a range of, for example, about 0.005 to about 0.45. The initial charge capacity of the cathode active material layer 12 may be determined by charging from a 1^{st} open circuit voltage to a maximum charging voltage vs. Li/Li⁺. The initial charge capacity of the first anode active material layer 22 may be determined by discharging from a 2^{nd} open circuit voltage to 0.01 V vs. Li/Li⁺.

The maximum charging voltage may be determined depending on the type or kind of cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S or a Li₂S composite may be 2.5 V vs. Li/Li⁺. For example, the maximum charging voltage of Li₂S or a Li₂S composite may be 3.0 V vs. Li/Li⁺. The ratio B/A of the initial charge capacity B of the first anode active material layer 22 to the initial charge capacity A of the cathode active material layer 12 may be in a range of, for example, about 0.01 to about 0.3, about 0.01 to about 0.2, or about 0.05 to about 0.1.

The initial charge capacity (milliampere hour (mAh)) of the cathode active material layer 12 may be obtained by multiplying the charge specific capacity (milliampere hour per gram (mAh/g)) of the cathode active material by the mass (g) of the cathode active material in the cathode active material layer 12. If (e.g., when) one or more suitable types (kinds) of cathode active materials are utilized, charge specific capacity x mass value may be calculated for each cathode active material, and the sum of these values may be the initial charge capacity of the cathode active material layer 12. Also, the initial charge capacity of the first anode active material layer 22 may be calculated in substantially the same way. The initial charge capacity of the first anode active material layer 22 may be obtained by multiplying the charge specific capacity (mAh/g) of the anode active material by the mass of the anode active material in the first anode active material layer 22. If (e.g., when) one or more suitable types (kinds) of anode active materials are utilized, charge specific capacity x mass value may be calculated for each anode active material, and the sum of these values may be the initial charge capacity of the first anode active material layer 22. The charge specific capacity of each of the cathode active material and the anode active material may be measured by utilizing an all-solid-state half-cell utilizing lithium metal as a counter electrode. The initial charge capacity of each of the cathode active material layer 12 and the first anode active material layer 22 may be directly measured by utilizing an all-solid-state half-cell at a constant current density of, for example, 0.1 milliampere per square centimeter (mA/cm²). For the cathode, the measurement may be performed from the 1^{st} open circuit voltage (OCV) to the maximum charging voltage, e.g., an operating voltage of 3.0 V (vs. Li/Li⁺). For the anode, the measurement may be performed from the 2^{nd} open circuit voltage (OCV) to, for example, an operating voltage of 0.01 V vs. lithium metal. For example, an all-solid-state half-cell having the cathode active material layer may be charged at a constant current of 0.1 mA/cm² from the 1^{st} open circuit voltage to 3.0 V, and an all-solid-state half-cell having the first anode active material layer may be charged at a constant current of 0.1 mA/cm² from the 2^{nd} open circuit voltage to 0.01 V. The current density during charging at a constant current may be, for example, 0.2 mA/cm² or 0.5 mA/cm². The all-solid-state half-cell having the cathode active material layer may be charged, for example, from the 1^{st} open circuit voltage to 2.5 V, 2.0 V, 3.5 V, or 4.0 V. The maximum charging voltage of the cathode active material layer may be determined by the maximum voltage of a battery that satisfies the safety conditions in accordance with JISC8712:2015 of the Japanese Standards Association, the entire content of which is hereby incorporated by reference.

If (e.g., when) the initial charge capacity of the first anode active material layer 22 is too small, the first anode active material layer 22 becomes very thin, so that lithium dendrites formed between the first anode active material layer 22 and the anode current collector 21 during charging and discharging processes may collapse the first anode active material layer 22, and thus, the cycle characteristics of the all-solid-state secondary battery 1 are hardly improved. If (e.g., when) the charging capacity of the first anode active material layer 22 is too high, the energy density of the all-solid-state secondary battery 1 may be reduced and the internal resistance of the all-solid-state secondary battery 1 due to the first anode active material layer 22 may be increased, making it difficult to improve the cycle characteristics of the all-solid-state secondary battery 1.

The thickness of the first anode active material layer 22 may be, for example, 50% or less, 40% or less, 30% or less, 20% or less, 10% or less, or 5% or less of the thickness of the cathode active material layer 12. The thickness of the first anode active material layer 22 may be in a range of, for example, about 1 % to about 50 %, about 1 % to about 40 %, about 1 % to about 30 %, about 1 % to about 20 %, about 1 % to about 10 %, or about 1% to about 5 % of the thickness of the cathode active material layer 12. The thickness of the first anode active material layer 22 may be in a range of, for example, about 1 µm to about 20 µm, about 2 µm to about 15 µm, or about 3 µm to about 10 µm. If (e.g., when) the thickness of the first anode active material layer 22 is too small, lithium dendrites formed between the first anode active material layer 22 and the anode current collector 21 may collapse the first anode active material layer 22, making it difficult for the all-solid-state secondary battery 1 to have improved cycle characteristics. If (e.g., when) the thickness of the first anode active material layer 22 is too large, the energy density of the all-solid-state secondary battery 1 may decrease and the internal resistance of the all-solid-state secondary battery 1 due to the first anode active material layer 22 may increase, making it difficult for the all-solid-state secondary battery 1 to have enhanced cycle characteristics. If (e.g., when) the thickness of the first anode active material layer 22 decreases, for example, the initial charge capacity of the first anode active material layer 22 may also be reduced.

### Anode: Second anode active material layer

In some embodiments, after charging, the all-solid-state secondary battery 1 may further include, for example, a second anode active material layer between the anode current collector 21 and the first anode active material layer 22. The second anode active material layer may be a metal layer including lithium or a lithium alloy. The metal layer may include lithium or a lithium alloy. Due to being a metal layer containing lithium, the second anode active material layer may serve as, for example, a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy. However, the present disclosure is not limited thereto and any lithium alloy utilized in the art is possible. The second anode active material layer may be formed of one of these alloys or lithium, or may be formed of several types (kinds) of alloys. The second anode active material layer may be, for example, a plated layer. For example, the second anode active material layer may be plated or deposited between the first anode active material layer 22 and the anode current collector 21 during the charging process of the all-solid-state secondary battery 1.

The thickness of the second anode active material layer is not limited, but may be in a range of, for example, about 1 µm to about 500 µm, about 1 µm to about 200 µm, about 1 µm to about 150 µm, about 1 µm to about 100 µm, or about 1 µm to about 50 µm. If (e.g., when) the thickness of the second anode active material layer is too small, it may be difficult for the second anode active material layer to function as a lithium reservoir. If (e.g., when) the thickness of the second anode active material layer is too large, the mass and volume of the all-solid-state secondary battery 1 may increase and the cycle characteristics of the all-solid-state secondary battery 1 may rather deteriorate.

In other embodiments, in the all-solid-state secondary battery 1, the second anode active material layer may be, for example, provided between the anode current collector 21 and the first anode active material layer 22, before assembly of the all-solid-state secondary battery 1. If (e.g., when) the second anode active material layer is provided between the anode current collector 21 and the first anode active material layer 22 before assembly of the all-solid-state secondary battery 1, the second anode active material layer may serve as a lithium reservoir due to being a lithium-containing metal layer. For example, before the all-solid-state secondary battery 1 is assembled, lithium foil may be provided between the anode current collector 21 and the first anode active material layer 22.

If (e.g., when) the secondary anode active material layer is deposited by charging after assembly of the all-solid-state secondary battery 1, the energy density of the all-solid-state secondary battery 1 may increase because the second anode active material layer is not included during assembly of the all-solid-state secondary battery 1. The all-solid-state secondary battery 1 may be charged at a charging capacity that exceeds that of the first anode active material layer 22. The first anode active material layer 22 may be overcharged. At the beginning of charging, lithium may be absorbed into the first anode active material layer 22. The anode active material included in the first anode active material layer 22 may form an alloy or compound with lithium ions that have migrated from the cathode 10. If (e.g., when) charging is performed to greater than the capacity of the first anode active material layer 22, for example, lithium is deposited at a rear surface of the first anode active material layer 22, i.e., between the anode current collector 21 and the first anode active material layer 22, and a metal layer corresponding to the second anode active material layer 24 may be formed by the deposited lithium. The second anode active material layer may be a metal layer mainly including (e.g., consisting of) lithium (i.e., lithium metal). These results may be obtained, for example, because the anode active material included in the first anode active material layer 22 includes a material that forms an alloy or compound with lithium. During discharging, lithium in the first anode active material layer 22 and the second anode active material layer 24, for example, the metal layer, may be ionized and migrate toward the cathode 10. Thus, it may be possible to utilize lithium as an anode active material in the all-solid-state secondary battery 1. In other embodiments, because the first anode active material layer 22 covers the second anode active material layer, the first anode active material layer 22 may serve as a protective layer for the second anode active material layer, for example, the metal layer, and at the same time, may serve to suppress or reduce the deposition and growth of lithium dendrites. Therefore, the short circuit and capacity reduction of the all-solid-state secondary battery 1 may be suppressed or reduced, resulting in improved cycle characteristics of the all-solid-state secondary battery 1. In other embodiments, if (e.g., when) the second anode active material layer is provided by charging after assembly of the all-solid-state secondary battery 1, the anode 20, i.e., the anode current collector 21, the first anode active material layer 22, and a region therebetween, may be Li-free regions that do not contain Li in an initial state or completely discharged state of the all-solid-state secondary battery 1.

### Anode: Anode current collector

Anode current collectors 21, 21a, and 21b may include or be made of a material that does not react with lithium, for example, a material that does not form both (e.g., simultaneously) an alloy and/or a compound with lithium. Examples of materials constituting the anode current collector 21 may include copper (Cu), stainless steel, titanium (Ti), iron (Fe), cobalt (Co), and/or nickel (Ni), but the present disclosure is not limited thereto and any electrode current collector utilized or suitable in the art is possible. The anode current collector 21 may include or be made of one of the hereindescribed metals, an alloy of at least two of the metals, or a coating material. The anode current collector 21 may be, for example, in the form of a plate or foil.

In some embodiments, for example, the all-solid-state secondary battery 1 may further include a thin film containing an element capable of forming an alloy with lithium on one surface of the anode current collector 21. The thin film may be provided between the anode current collector 21 and the first anode active material layer 22. The thin film may include, for example, an element capable of forming an alloy with lithium. Examples of the element capable of forming an alloy with lithium may include gold, silver, zinc, tin, indium, silicon, aluminum, and/or bismuth, but the present disclosure is not limited thereto and any element capable of forming an alloy with lithium in the art is possible. The thin film may include or be formed of one of these metals or an alloy of several types (kinds) of these metals. By disposing the thin film on one surface of the anode current collector 21, for example, a deposition form of the second anode active material layer deposited between the thin film and the first anode active material layer 22 may become smoother, and the cycle characteristics of the all-solid-state secondary battery 1 may be further improved.

The thickness of the thin film may be in a range of, for example, about 1 nm to about 800 nm, about 10 nm to about 700 nm, about 50 nm to about 600 nm, or about 100 nm to about 500 nm. If (e.g., when) the thickness of the thin film is less than 1 nm, it may be difficult for the thin film to properly function. If (e.g., when) the thickness of the thin film is too large, the thin film itself may absorb lithium, thus reducing the amount of lithium deposited at the anode, and thus, the energy density of an all-solid-state battery 1 may be reduced and the cycle characteristics of the all-solid-state secondary battery 1 may deteriorate. The thin film may be provided on the anode current collector 21 by, for example, vacuum deposition, sputtering, plating, and/or the like. However, the present disclosure is not limited to these methods and any method for forming the thin film in the art is possible.

In some embodiments, the anode current collector 21 may include, for example, a base film and a metal layer provided on at least one side (e.g., on both (e.g., opposite) sides) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. The base film softens or liquefies if (e.g., when) a short circuit occurs, by including an insulating thermoplastic polymer, and thus a rapid increase in current may be suppressed or reduced by blocking battery operation. The metal layer may include, for example, copper (Cu), stainless steel, titanium (Ti), iron (Fe), cobalt (Co), nickel (Ni), or an alloy thereof. The anode current collector 21 may further include a metal chip and/or a lead tab. More details on the base film, the metal layer, the metal chip, and the lead tab of the anode current collector 21 may be referred to those provided herein in connection with the cathode current collector 11. If (e.g., when) the anode current collector 21 has this structure, the weight of the anode may be reduced, resulting in improved energy density of the anode and an all-solid-state secondary battery.

### Electrolyte layer

### Electrolyte layer: Electrolyte

Referring to FIGS. 2 to 6, the solid electrolyte layer 30 is provided between the cathode 10 and the anode 20, and includes an electrolyte.
The solid electrolyte layer (30) comprisesa solid electrolyteThe solid electrolyte that is further included in the electrolyte layer 30 may be, for example, an oxide-based solid electrolyte, a solid polymer electrolyte, or a combination thereof.

The oxide-based solid electrolyte may be, for example, Li_{1+x+y}AlₓTi₂₋ₓSi_{y}P_{3-y}O₁₂ where 0<x<2 and 0≤y<3, BaTiO₃, Pb(Zr,Ti)O₃(PZT), Pb₁₋ₓLaₓZr_{1-y} Ti_{y}O₃(PLZT) where 0≤x<1 and 0≤y<1, PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ where 0<x<2 and 0<y<3, LiₓAl_{y}Ti_{z}(PO₄)₃ where 0<x<2, 0<y<1, and 0<z<3, Li_{1+x+y}(Al, Ga)ₓ(Ti, Ge)₂₋ₓSi_{y}P_{3-y}O₁₂ where 0≤x≤1 and 0≤y≤1, LiₓLa_{y}TiO₃ where 0<x<2 and 0<y<3, Li₂O, LiOH, Li₂CO₃, LiAlO₂, Li₂O-Al₂O₃-SiO₂-P₂Os-TiO₂-GeO₂, Li₃₊ₓLa₃M₂O₁₂ where M = Te, Nb, or Zr, and 0≤x≤10, or a combination thereof. The oxide-based solid electrolyte may be prepared by, for example, a sintering method and/or the like.

The oxide-based solid electrolyte may be, for example, a garnet-type or kind solid electrolyte selected from among Li₇La₃Zr₂O₁₂(LLZO) and Li₃₊ₓLa₃Zr₂₋ₐMₐO₁₂ (M= doped LLZO, M=Ga, W, Nb, Ta, or Al, 0<a<2, and 0≤x≤10).

The solid polymer electrolyte may include, for example, a mixture of a lithium salt and a polymer, or a polymer having an ion-conducting functional group. The solid polymer electrolyte may be, for example, a polyelectrolyte in a solid state at 25 °C and 1 atm. The solid polymer electrolyte may not include (e.g., may exclude), for example, liquid. The solid polymer electrolyte may include a polymer, and examples of the polymer may include polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethyleneoxide-styrene) block or reduce copolymer, polystyrene sulfonate (PSS), polyvinyl fluoride (PVF), polymethyl methacrylate (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)], (SPBIBI), poly(styrene sulfonate) (PSS), lithium 9,10-diphenylanthracene-2-sulfonate (DPASLi⁺), or a combination thereof. However, the present disclosure is not limited thereto and any solid electrolyte utilized in the art is possible. The lithium salt may be any lithium salt that may be utilized in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiALCL₄, LiN(CₓF₂ₓ₊₁SO₂)(CyF_{2y+1}SO₂) where x and y are each 1 to 20, LiCl, Lil, or a mixture thereof. The polymer included in the solid polymer electrolyte may be, for example, a compound containing 10 or more, 20 or more, 50 or more, or 100 or more repeating units. The weight average molecular weight of the polymer included in the solid polymer electrolyte may be, for example, 1,000 Daltons or more, 10,000 Daltons or more, 100,000 Daltons or more, or 1,000,000 Daltons or more. The weight average molecular weight of the polymer is measured by a gel permeation chromatography (GPC).

The all-solid-state secondary battery includes an electrolyte, the electrolyte comprises a liquid electrolyte, a gel electrolyte, or a combination thereof.

The gel electrolyte may be, for example, a polymer gel electrolyte. For example, the gel electrolyte may be in a gel state without including polymers.

For example, the polymer gel electrolyte may include a liquid electrolyte and a polymer, or may include an organic solvent and a polymer having an ion-conducting functional group. The polymer gel electrolyte may be, for example, a polyelectrolyte in a gel state at 25 °C and 1 atm. For example, the polymer gel electrolyte may not include (e.g., may exclude) liquid and may be in a gel state.

For example, a liquid electrolyte utilized in the electrolyte or a liquid electrolyte utilized in the polymer gel electrolyte may be: a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in the solid polymer electrolyte. The organic solvent may be selected from organic solvents utilized in the liquid electrolyte. The lithium salt may be selected from lithium salts utilized in the solid polymer electrolyte. The ionic liquid may refer to a salt in a liquid state at room temperature or a room temperature molten salt that has a melting point less than (e.g., below) room temperature and includes ions. The ionic liquid may include, for example, at least one selected from among compounds including: a) at least one cation selected from among an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) at least one anion selected from among BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)₂N-, (C₂F₅SO₂)(CF₃SO₂)N-, and (CF₃SO₂)₂N-. For example, the solid polymer electrolyte may be impregnated into a liquid electrolyte in a secondary battery, thereby forming a polymer gel electrolyte. The polymer gel electrolyte may further include inorganic particles. The polymer included in the polymer gel electrolyte may be, for example, a compound containing 10 or more, 20 or more, 50 or more, or 100 or more repeating units. The weight average molecular weight of the polymer included in the polymer gel electrolyte may be, for example, 500 Daltons or more, 1,000 Daltons or more, 10,000 Daltons or more, 100,000 Daltons or more, or 1,000,000 Daltons or more.

Any organic solvent utilized in the art may be utilized. Non-limiting examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, diethylene glycol, dimethyl ether, or a mixture thereof.

### Electrolyte layer: Binder

The electrolyte layer 30 may include, for example, a binder. The binder included in the electrolyte layer 30 may be, for example, styrene-butadiene rubber (SBR), polytetrafluoroethylene, polyvinylidene fluoride, polyethylene, and/or the like, but the present disclosure is not limited thereto and any binder utilized in the art is possible. The binder of the electrolyte layer 30 may be equal to or different from binders included in the cathode active material layer 12 and the anode active material layer 22. The binder may not be provided.

The amount of the binder included in the electrolyte layer 30 may be in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt%, with respect to the total weight of the electrolyte layer 30.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present disclosure will be described in further detail with reference to the following examples and comparative examples. However, these examples are provided for illustrative purposes only and are not intended to limit the scope of the present disclosure.

### EXAMPLES

### Preparation of composite

### Preparation Example 1: Al₂O₃@Gr composite

Al₂O₃ particles (average particle diameter: about 20 nanometer (nm)) were placed in a reactor, and then CH₄ was supplied into the reactor at about 300 standard cubic centimeters per minute (sccm) and 1 atm for about 30 minutes, and the temperature inside the reactor was raised up to 1,000 °C.

Subsequently, the heat treatment was performed while maintaining the temperature for 7 hours. Then, the temperature inside the reactor was adjusted to room temperature (20 °C to 25 °C) to obtain a composite in which Al₂O₃ particles and Al₂O_{z}, where 0<z<3 particles as a reduction product thereof, were embedded in graphene.

The amount of alumina included in the composite was about 75 wt%.

### Preparation Example 2: Al₂O₃@Gr composite

A composite was prepared in substantially the same manner as in Preparation Example 1, except that Al₂O₃ particles (average particle diameter: about 200 nm) were utilized instead of the Al₂O₃ particles (average particle diameter: about 20 nm).

### Preparation Example 3: Li₂S-LiI-CNF, two processes, 10 hr, 600 rpm, 28 G First process

Li₂S and Lil were mixed in a weight ratio of 30:20. The mixture was mechanically milled by utilizing a ball mill to prepare a Li₂S-LiI composite. The milling conditions were as follows: at 25 °C and 600 rpm for 10 hours. Milling energy applied to the sample during milling was 28 G.

### Second process

The Li₂S-LiI composite and carbon nanofibers (CNFs) were mixed in a weight ratio of 50:10. The mixture was mechanically milled by utilizing a ball mill to prepare a Li₂S-LiI-CNF composite. The milling conditions were as follows: at 25 °C and 600 rpm for 10 hours. Milling energy applied to the sample during milling was 28 G. The Li₂S-LiI-CNF composite was utilized as a composite cathode active material.

The Mohs hardness of Li₂S was 0.6, the Mohs hardness of Lil was 2.0, and the Mohs hardness of the carbon nanofibers (CNFs) was 1.5.

### Comparative Preparation Example 1: SiO₂@Gr composite

SiO₂ particles (average particle diameter: about 15 nm) were placed in a reactor, and then CH₄ was supplied into the reactor at about 300 sccm and 1 atm for about 30 minutes, and the temperature inside the reactor was raised up to 1,000 °C.

Subsequently, the heat treatment was performed while maintaining the temperature for 7 hours. Then, the temperature inside the reactor was adjusted to room temperature (20 °C to 25 °C) to obtain a composite in which SiO₂ particles and SiO_{y}, where 0<y<2 particles as a reduction product thereof, were embedded in graphene.

### Manufacture of cathode

### Example 1: Cathode active material (Li₂S-GB) + solid electrolyte (SE) + carbon nanofibers (CNFs) (weight ratio of 45:45:10)

### First process

Li₂S having an average particle diameter of 10 µm and the composite (Al₂O₃-GB) prepared according to Preparation Example 1 in a weight ratio of 27:18 were milled by utilizing a planetary mixer at about 500 rpm for about 10 hours to obtain a Li₂S-(Al₂O₃-GB) composite. In this regard, Li₂S and the composite prepared according to Preparation Example 1 were mixed in a weight ratio of 3:2.

The Li₂S-(Al₂O₃-GB) composite and argyrodite-type or kind crystals Li₆PS₅Cl (D50=3.0 µm, crystalline) as a solid electrolyte were prepared in a weight ratio of 45:45. The prepared materials were added into a thinky mixer and mildly mixed at 2,000 rpm for 1.5 minutes to obtain a mixed powder of the composite and the solid electrolyte.

### Second process

10 parts by weight of carbon nanofibers (hereinafter, CNFs) was added to 90 parts by weight of the mixed powder of the composite and the solid electrolyte, recovered in the preceding (e.g., first) process, followed by mixing utilizing a mortar, to obtain a cathode mixture. The CNFs had a length of 60 µm and a diameter of 300 nm.

The cathode mixture was placed on one surface of a cathode current collector made of aluminum foil coated with carbon on one side thereof, followed by plate pressing at a pressure of 200 megapascal (MPa) for 10 minutes, to thereby complete the manufacture of a cathode. The thickness of the cathode was about 120 µm. The thickness of the cathode active material layer was about 100 µm, and the thickness of the carbon-coated aluminum foil was about 20 µm. The cathode active material layer had the same area (e.g., surface area) as the cathode current collector.

In the cathode, the amount of the composite (Al₂O₃-GB) was 45 wt%, the amount of the solid electrolyte was 45 wt%, and the amount of the CNFs was 10 wt%.

### Example 2: Cathode active material (Li₂S-GB) + SE + CNF (weight ratio of 40:50:10)

A cathode was manufactured in substantially the same manner as in Example 1, except that the mixing ratio of the Li₂S-(Al₂O₃-GB) composite to the argyrodite-type or kind crystals Li₆PS₅Cl (D50=3.0 µm, crystalline) as a solid electrolyte was changed to a weight ratio of 40:50.

### Example 3: Cathode active material (Li₂S-GB) + SE + CNF (weight ratio of 60:30:10)

A cathode was manufactured in substantially the same manner as in Example 1, except that the mixing ratio of the Li₂S-(Al₂O₃-GB) composite to the argyrodite-type or kind crystals Li₆PS₅Cl (D50=3.0 µm, crystalline) as a solid electrolyte was changed to a weight ratio of 60:30.

### Example 4: Cathode active material (Li₂S-LiI-CNF) + SE (weight ratio of 60:40)

The composite prepared according to Preparation Example 3 as a cathode active material and argyrodite-type or kind crystals Li₆PS₅Cl (D50=3.0 µm, crystalline) as a solid electrolyte were prepared in a weight ratio of 60:40. The prepared materials were added into a thinky mixer and mildly mixed at 2,000 rpm for 1.5 minutes to obtain a mixed powder of the composite and the solid electrolyte, which was a cathode mixture.

The cathode mixture was placed on one surface of a cathode current collector made of aluminum foil and coated with carbon on one side thereof, (e.g., the cathode mixture was placed on the side/surface of the cathode current collector including the coated carbon), followed by plate pressing at a pressure of 200 MPa for 10 minutes, to thereby complete the manufacture of a cathode. The thickness of the cathode was about 120 µm. The thickness of the cathode active material layer was about 100 µm, and the thickness of the carbon-coated aluminum foil was about 20 µm. The cathode active material layer had the same area (e.g., surface area) as the cathode current collector.

### Example 5: Cathode active material (Li₂S-LiI-CNF) + SE (weight ratio of 70:30)

A cathode was manufactured in substantially the same manner as in Example 4, except that the mixing ratio of the Li₂S-LiI-CNF composite to the argyrodite-type or kind crystals Li₆PS₅Cl (D50=3.0 µm, crystalline) as a solid electrolyte was changed to a weight ratio of 70:30.

### Comparative Example 1: Cathode active material (Li₂S-GB) + SE + CNF (weight ratio of 45:45:10)

A cathode was manufactured in substantially the same manner as in Example 1, except that, in preparing a mixed powder of the composite and the solid electrolyte, milling utilizing a ball mill was performed together with a 5 millimeter (mm) ball at 500 rpm for 2 hours instead of the mixing process utilizing a thinky mixer.

### Comparative Example 2: Cathode active material (Li₂S-LiI-CNF) + SE (weight ratio of 60:40)

A cathode was manufactured in substantially the same manner as in Example 4, except that, in preparing a mixed powder of the composite and the solid electrolyte, milling utilizing a ball mill was performed together with a ball having a diameter of 5 mm at 500 rpm for 2 hours instead of the mixing process utilizing a thinky mixer.

### Comparative Example 3: Cathode active material (simple blend of Li₂S and GB) + SE + CNF (weight ratio of 45:45:10)

A cathode was manufactured in substantially the same manner as in Example 1, except that a cathode active material (a simple blend of Li₂S and GB) was obtained through the following process, instead of the Li₂S-GB composite.

Li₂S having an average particle diameter of 10 µm and the composite prepared according to Preparation Example 1 (Al₂O₃-GB) were simply mixed in a weight ratio of 27:18 to obtain a mixture.

### Comparative Example 4: Cathode active material (Li₂S-LiI-CNF) + SE (weight ratio of 60:40)

A cathode was manufactured in substantially the same manner as in Example 4, except that a composite obtained through the following processes was utilized instead of the Li₂S-LiI-CNF composite.

Li₂S, Lil, and carbon nanofibers (CNFs) were simply mixed in a weight ratio of 30:20:10. The mixture was mechanically milled by utilizing a ball mill to prepare a Li₂S-LiI-CNF composite. The milling conditions were as follows: at 25 °C and 600 rpm for 2 hours. Milling energy applied to the sample during milling was 20 G. The Li₂S-LiI-CNF composite was utilized as a composite cathode active material.

### Manufacture Example 1: All-solid-state secondary battery

### Manufacture of anode

SUS (stainless steel) foil having a thickness of 10 µm was prepared as an anode current collector. Carbon black (CB) having a primary particle diameter of about 30 nm and silver (Ag) particles having an average particle diameter of about 60 nm were prepared as anode active materials.

4 g of a mixed powder in which the carbon black (CB) and the silver (Ag) particles were mixed in a weight ratio of 3:1 was placed in a container, and 4 g of an N-methyl-2-pyrrolidone (NMP) solution including 7 wt% of a polyvinylidene fluoride (PVDF) binder (# 9300 from Kureha) was added thereto to prepare a mixed solution. Subsequently, the mixed solution was stirred while NMP was added little by little thereto, to prepare a slurry. The prepared slurry was applied onto a SUS sheet by utilizing a bar coater and dried in the air at 80 °C for 10 minutes. The obtained laminate was vacuum-dried at 40 °C for 10 hours. The dried laminate was cold-roll pressed at a pressure of 5 ton force per square centimeter (ton·f/cm²) and a rate of 5 meter per second (m/sec) to planarize the surface of a first anode active material layer of the laminate. An anode was manufactured through the preceding processes. The thickness of the first anode active material layer included in the anode was about 15 µm. The first anode active material layer had the same area as the anode current collector.

### Manufacture of cathode

The cathode of Example 1 was utilized.

### Manufacture of solid electrolyte layer

1.5 parts by weight of an acrylic binder with respect to 98.5 parts by weight of the solid electrolyte was added to argyrodite-type or kind crystals Li₆PS₅Cl solid electrolyte (D₅₀=3.0 µm, crystalline) to prepare a mixture. Octyl acetate was added to the prepared mixture and stirred to prepare a slurry. The prepared slurry was applied utilizing a bar coater onto 15 µm-thick non-woven fabric placed on a polyethylene terephthalate (PET) substrate having a thickness of 75 µm, and dried in the air at 80 °C for 10 minutes to prepare a laminate. The obtained laminate was vacuum-dried at 80 °C for 2 hours. A solid electrolyte layer was manufactured through the preceding processes.

### Inactive member

A slurry, in which cellulose fiber, glass fiber, aluminum hydroxide (Al(OH)₃), an acrylic binder, and a solvent were mixed, was molded into a gasket shape, and then the solvent was removed therefrom, to manufacture a flame-retardant inactive member.

A weight ratio of the cellulose fiber, the glass fiber, the aluminum hydroxide (Al(OH)₃), and the acrylic binder was 20:8:70:2. The thickness of the inactive member was 120 µm.

The manufactured flame-retardant inactive member was heat-treated in vacuum at 80 °C for 5 hours before being provided on the solid electrolyte layer to remove moisture and/or the like from the flame-retardant inactive member.

### Manufacture of all-solid-state secondary battery

A solid electrolyte layer was placed on an anode such that a first anode active material layer was in contact with a first solid electrolyte layer and a second solid electrolyte layer was provided on the first solid electrolyte layer, and a cathode was placed on the solid electrolyte layer. A gasket around (e.g., surrounding) the cathode and in contact with the solid electrolyte layer was placed around (e.g., surrounding) the cathode to prepare a stack. The thickness of the gasket was about 120 µm. The flame-retardant inactive member was utilized as a gasket. The gasket was arranged to be in contact with a side surface of the cathode and the solid electrolyte layer. The cathode was arranged on a central portion of the solid electrolyte layer, and the gasket was arranged around (e.g., to surround) the cathode and to extend to an end portion of the solid electrolyte layer. The area (e.g., surface area) of the cathode was about 90 % of the area (e.g., surface area) of the solid electrolyte layer, and the gasket was arranged on the remaining 10 % of the total area (e.g., surface area) of the solid electrolyte layer, on which the cathode was not arranged.

The prepared stack was plate pressed at 85 °C and a pressure of 500 MPa for 30 minutes. The solid electrolyte layer was sintered through such pressing, thus improving battery performance characteristics. The thickness of the sintered solid electrolyte layer was about 45 µm. Argyrodite-type or kind crystals Li₆PS₅Cl, which is a solid electrolyte, included in the sintered solid electrolyte layer had a density of 1.6 gram per cubic centimeter (g/cc). The solid electrolyte layer had the same area as the anode.

The pressed stack was placed in a pouch and vacuum-sealed to thereby complete the manufacture of an all-solid-state secondary battery. Parts (e.g., portions) of a cathode current collector and an anode current collector were extended to outside the sealed battery and utilized as a cathode tab and an anode tab.

### Manufacture Examples 2 to 5

All-solid-state secondary batteries were manufactured in substantially the same manner as in Manufacture Example 1, except that, in the manufacture of a cathode, the cathodes of Examples 2 to 5 were respectively utilized instead of the cathode of Example 1.

### Manufacture Example 6

An all-solid-state secondary battery was manufactured in substantially the same manner as in Manufacture Example 1, except that the following silver particle-supported carbon black was utilized as the anode active material instead of the blend of carbon black and silver particles.

### Production of silver particle-supported carbon black

Carbon black was dispersed in a 1.0 M sulfuric acid solution, followed by stirring for 2 hours, filtration, and drying, to prepare an acid-treated carbon black.

10 g of the acid-treated carbon black was added to a mixed solvent of 1,500 g of distilled water, 1,500 g of ethanol, and 30 g of glycerol and stirred, and then 2 g of AgNO₃ was added thereto, followed by stirring, to prepare a mixed solution. The particle diameter of the carbon black was 80 nm. A reducing agent was added to the mixed solution, thereby reducing and supporting silver ions on the carbon black. The carbon black with silver-containing particles supported thereon was filtered, washed, and dried to prepare a composite anode active material. As a result of scanning electron microscopy and XPS measurement, it was confirmed that a plurality of silver-containing particles were supported on carbon black particles. The silver-containing particles were silver particles, silver oxide (Ag₂O) particles, and composite particles of silver (Ag) and silver oxide (Ag₂O). The amount of the silver-containing particles included in the composite anode active material was 5 wt%. The average particle diameter of the silver particles was 10 nm.

### Comparative Manufacture Examples 1 to 4

All-solid-state secondary batteries were manufactured in substantially the same manner as in Manufacture Example 1, except that, in the manufacture of a cathode, the cathodes of Comparative Examples 1 to 4 were respectively utilized instead of the cathode of Example 1.

### Evaluation Example 1: Resistance analysis

The resistance of the cathode mixture, which is the mixed powder of each of the cathode active materials prepared according to Examples 1 to 5 and Comparative Examples 1 and 2 and the solid electrolyte, was analyzed. The resistance analysis was carried out by utilizing a Solartron 1470E Potentiostat, and the analysis results thereof are shown in Table 1.

**Table 1**

| Classification | Conditions | Resistance (Ω) |
|---|---|---|
| Example 1 | Cathode active material (Li₂S-GB)+SE+CNF=45:45:10 on weight ratio basis, thinky mixer | 183.1 |
| Example 2 | Cathode active material (Li₂S-GB)+SE+CNF=40:50:10 on weight ratio basis, thinky mixer | 175.3 |
| Example 3 | Cathode active material (Li₂S-GB)+SE+CNF=60:30:10 on weight ratio basis, thinky mixer | 183.3 |
| Example 4 | Cathode active material (Li₂S-LiI-CNF)+SE=60:40 on weight ratio basis, thinky mixer | 126.1 |
| Example 5 | Cathode active material (Li₂S-LiI-CNF)+SE=70:30 on weight ratio basis, thinky mixer | 142.9 |
| Comparative Example 1 | Cathode active material (Li₂S-GB)+SE+CNF=45:45:10 on weight ratio basis, ball milling | 384.2 |
| Comparative Example 2 | Cathode active material (Li₂S-LiI-CNF)+SE=60:40 on weight ratio basis, ball milling | 354.1 |
| Comparative Example 3 | Cathode active material (simple blend of Li₂S and GB)+SE+CNF=45:45:10 on weight ratio basis, ball milling | 485.5 |
| Comparative Example 4 | Cathode active material (Li₂S-LiI-CNF)+SE=60:40 on weight ratio basis, ball milling | 493.1 |

As shown in Table 1, it may be confirmed that the cathode mixtures of Examples 1 to 5 exhibit remarkably reduced resistances compared to the cathode mixtures of Comparative Examples 1 to 4.

### Evaluation Example 2: XRD analysis and scanning electron microscopy

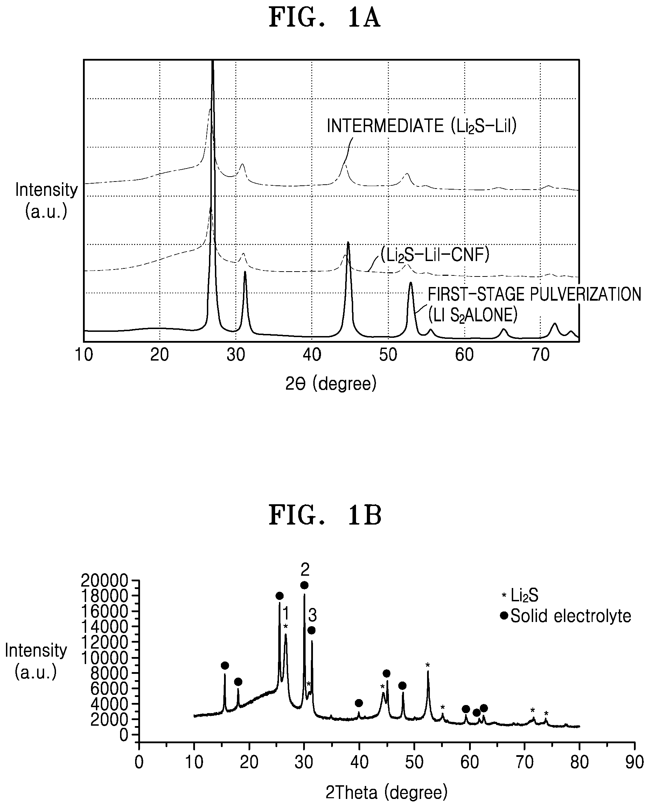

X-ray diffraction (XRD) spectra of bare Li₂S utilized in Preparation Example 3, the pulverized Li₂S, the Li₂S-LiI composite prepared in the first process according to Preparation Example 3, and the Li₂S-LiI-CNF composite prepared according to Preparation Example 3 were measured by utilizing Cu Kα radiation. The measurement results thereof are shown in Table 2 and FIG. 1A. In the XRD spectra, the size and lattice constant of Li₂S crystallites were derived from a first peak for the (111) crystal plane appearing at a diffraction angle of 2θ = 27° ± 2.0°.

The pulverized Li₂S was prepared by milling under the conditions described herein, except that the mixture of Li₂S and Lil in a weight ratio of 30:20, utilized in the first process according to Preparation Example 3, was changed to 50 parts by weight of Li₂S. The second process was not performed.

The particle sizes (e.g., particle size D50) of the bare Li₂S utilized in Preparation Example 3, the pulverized Li₂S, the Li₂S-LiI composite prepared in the first process according to Preparation Example 3, and the particle sizes (e.g., particle size D50) of the Li₂S-LiI-CNF composite prepared according to Preparation Example 3 were measured by utilizing a particle size analyzer (PSA) utilizing a laser, and the size of Li₂S particles of the composite was measured by utilizing a scanning electron microscope. The measurement results thereof are shown in Table 2.

**Table 2**

| Classification | Second peak position [°] | Li₂S crystallite size [nm] | Li₂S particle size [µm] |
|---|---|---|---|
| Bare Li₂S | 27.0211 | 64.67 | 8 |

| | First peak position [°] | Li₂S crystallite size [nm] | Li₂S particle size [µm] |
|---|---|---|---|
| Pulverized Li₂S | 26.9270 | 15.42 | - |
| Li₂S-LiI composite (first process) | 26.6074 | 8.83 | less than 1 |
| Preparation Example 3 (Li₂S-LiI-CNF composite) | 26.7020 | 9.86 | less than 1 |

As shown in Table 2, the position of the first peak corresponding to a (111) crystal plane that appears (e.g., exists) at a diffraction angle (2θ) of 27°± 2.0° of the Li₂S-LiI-CNF composite of Preparation Example 3 was shifted to a low angle compared to the position of the second peak corresponding to a (111) crystal plane that appears (e.g., exists) at a diffraction angle (2θ) of 27°± 2.0° of bare Li₂S. A first diffraction angle of the first peak of the Li₂S-LiI-CNF composite of Preparation Example 3 was smaller than a second diffraction angle of the second peak of bare Li₂S. Thus, the crystallite size of the Li₂S-LiI-CNF composite of Preparation Example 3 was remarkably reduced compared to the crystallite size of bare Li₂S.

As shown in Table 2 and FIG. 1A, the positions of the first peaks of the Li₂S-Lil-CNF composite of Preparation Example 3 and the Li₂S-LiI composite as an intermediate in the first process of Example 1 were shifted to low angles compared to the position of the first peak of the pulverized Li₂S.

A first lattice constant (d1) derived from the first peak corresponding to a (111) crystal plane that appears (e.g., exists) at a diffraction angle (2θ) of 27°± 2.0° of the Li₂S-LiI-CNF composite of Preparation Example 3 was greater than a second lattice constant (d2) derived from the second peak corresponding to a (111) crystal plane that appears (e.g., exists) at a diffraction angle (2θ) of 27°± 2.0° of bare Li₂S. The first lattice constant (d1) was 5.78 Å or more.

This was attributed to an increased lattice constant value resulting from the dissolution of Lil in Li₂S crystals. It was confirmed that the Li₂S-LiI-CNF composite formed a solid solution.

In some embodiments, the first peak of the Li₂S-LiI-CNF composite of Preparation Example 3 had a first full width at half maximum (FWHM1), the second peak of bare Li₂S had a second full width at half maximum (FWHM2), and the first full width at half maximum was greater than the second full width at half maximum. The first full width at half maximum (FWHM1) was 1° or more.

In some embodiments, the particle size of the composite of Preparation Example 3 was about 5 µm.

### Evaluation Example 3: XRD analysis and scanning electron microscopy

The XRD spectra of bare Li₂S utilized in Example 1, pulverized Li₂S, and the Li₂S-GB composite prepared in the first process according to Example 1 were measured by utilizing Cu Kα radiation. The measurement results thereof are shown in Table 3. In the XRD spectra, the size and lattice constant of Li₂S crystallites were derived from a first peak for the (111) crystal plane appearing at a diffraction angle of 2θ = 27° ± 2.0°.

The pulverized Li₂S was prepared by milling under the conditions described herein, except that, in the first process of Example 1, 45 parts by weight of Li₂S was utilized instead of the mixture of Li₂S and GB in a weight ratio of 27:18. The second process was not performed.

The particle sizes (e.g., particle size D50) of the bare Li₂S utilized in Example 1, the pulverized Li₂S, and the Li₂S-GB composite prepared in the first process of Example 1 were measured by utilizing a particle size analyzer (PSA) utilizing a laser and by utilizing a scanning electron microscope. The measurement results thereof are shown in Table 3.

**Table 3**

| Classification | Second peak position [°] | Li₂S crystallite size [nm] | Composite particle size [µm] |
|---|---|---|---|
| Bare Li₂S | 27.0211 | 64.67 | 8 |

| | First peak position [°] | Li₂S crystallite size [nm] | Particle size [µm] |
|---|---|---|---|
| Pulverized Li₂S | 26.9270 | 15.42 | - |
| Li₂S-GB composite | 26.999 | 9.89 | 1 |

As shown in Table 3, the position of the first peak corresponding to a (111) crystal plane that appears (e.g., exists) at a diffraction angle (2θ) of 27°± 2.0° of the Li₂S-GB composite of Example 1 was shifted to a low angle compared to the position of the second peak corresponding to a (111) crystal plane that appears (e.g., exists) at a diffraction angle (2θ) of 27°± 2.0° of bare Li₂S. A first diffraction angle of the first peak of the Li₂S-GB composite of Example 1 was smaller than a second diffraction angle of the second peak of bare Li₂S. Thus, the crystallite size of the Li₂S-GB composite of Example 1 was remarkably reduced compared to the crystallite size of bare Li₂S.

As shown in Table 3, the position of the first peak of the Li₂S-GB composite of Example 1 was shifted to a low angle compared to the position of the first peak of the pulverized Li₂S.

In some embodiments, the first peak of the Li₂S-GB composite of Example 3 had a first full width at half maximum (FWHM1), the second peak of bare Li₂S had a second full width at half maximum (FWHM2), and the first full width at half maximum was greater than the second full width at half maximum. The first full width at half maximum (FWHM1) was 1° or more.

### Evaluation Example 4: Test of initial efficiency and lifespan characteristics

The charge/discharging characteristics of the all-solid-state secondary batteries manufactured according to Manufacture Examples 1 to 6 and Comparative Manufacture Examples 1 to 4 were evaluated by the following charge/discharge test. The charge/discharge test was performed by placing each all-solid-state secondary battery in a thermostat at 45 °C.

The charge/discharge test was performed by placing each all-solid-state secondary battery in a thermostat at 45 °C.

In the 1^{st} cycle, each battery was charged at a constant current of 0.1 C for 12.5 hours until the voltage reached 2.5 V to 2.8 V. Subsequently, each battery was discharged at a constant current of 0.1 C for 12.5 hours until the voltage reached 0.3 V.

The discharge capacity of the 1^{st} cycle was utilized as the standard capacity. The standard capacity was represented as the specific capacity of Li₂S in Table 1.

After the 2^{nd} cycle, charging and discharging were performed up to 150 cycles under the same conditions as the 1^{st} cycle. The measurement results thereof are shown in Table 4. The initial efficiency is expressed by Equation 1, and a capacity retention rate is defined by Equation 2. 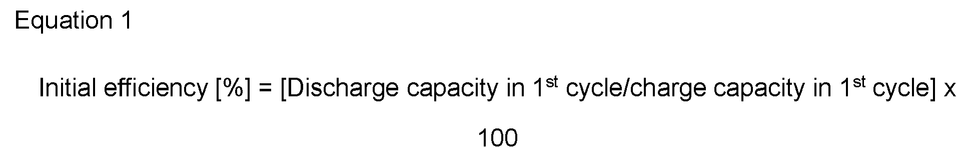 Initial efficiency [%] = [Discharge capacity in 1st cycle/charge capacity in 1st cycle] x 100 Equation 1 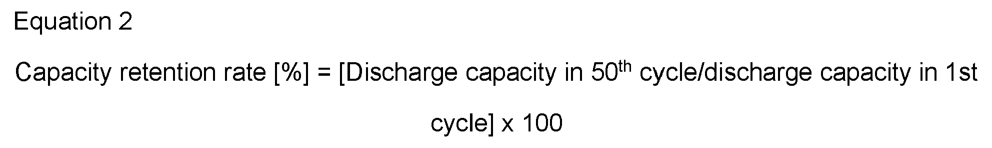 Capacity retention rate [%] = [Discharge capacity in 50th cycle/discharge capacity in 1st cycle] x 100 Equation 2

**Table 4**

| Classification | Conditions | Cathode active material composition | Capacity (mAh/g) | Initial efficiency (%) | Capacity retention rate [%] @ 20 cycles |
|---|---|---|---|---|---|
| Manufacture Example 1 | Cathode active material (Li₂S-GB)+SE+CNF=45:4 5:10 on weight ratio basis, thinky mixer | Li₂S:GB:SE: CNF=27:18: 45:10 | 799 | 107.4 | 86.3 |
| Manufacture Example 2 | Cathode active material (Li₂S-GB)+SE+CNF=40:5 0:10 on weight ratio basis, thinky mixer | Li₂S:GB:SE: CNF=24:16: 50:10 | 725 | 104.1 | 87.5 |
| Manufacture Example 3 | Cathode active material (Li₂S-GB)+SE+CNF=60:3 0:10 on weight ratio basis, thinky mixer | Li₂S:GB:SE: CNF=36:24: 30:10 | 786 | 106.2 | 80.2 |
| Manufacture Example 4 | Cathode active material (Li₂S-LiI-CNF)+SE=60:40 on weight ratio basis, thinky mixer | Li₂S:LiI:CNF: SE=30:20:10 :40 | 961 | 82.6 | 88.8 |
| Manufacture Example 5 | Cathode active material (Li₂S-LiI-CNF)+SE=70:30 on weight ratio basis, thinky mixer | Li₂S:LiI:CNF: SE= 35:23.3:11.7: 30 | 1023 | 87.3 | 84.2 |
| Comparative Manufacture Example 1 | Cathode active material (Li₂S-GB)+SE+CNF=45:4 5:10 on weight ratio basis, ball milling | Li₂S:GB:SE: CNF=27:18: 45:10 | 151 | 113.8 | 37.6 |
| Comparative Manufacture Example 2 | Cathode active material (Li₂S-LiI-CNF)+SE=60:40 on weight ratio basis, ball milling | Li₂S:LiI:CNF: SE=30:20:10 :40 | 352 | 81.2 | 41.3 |
| Comparative Manufacture Example 3 | Cathode active material (simple blend of Li₂S and GB)+SE+CNF=45:4 5:10 on weight ratio basis, ball milling thinky mixer | Li₂S:GB:SE: CNF=27:18: 45:10 | 100 | 53.7 | <10 |
| Comparative Manufacture Example 4 | Cathode active material (Li₂S-LiI-CNF)+SE=60:40 on weight ratio basis, ball milling | Li₂S:LiI:CNF: SE=30:20:10 :40 | 178 | 52.1 | <10 |

As shown in Table 4, it was confirmed that the all-solid-state secondary batteries of Manufacture Examples 1 to 5 each exhibited improved initial efficiency and capacity retention rates compared to those of Comparative Manufacture Examples 1 to 4.

In each of Comparative Manufacture Examples 1 and 2, the solid electrolyte was damaged by ball milling, resulting in defects in the path for ion transfer into the cathode, and thus, capacity was rapidly reduced compared to the cathodes of Examples 1 to 5.

In Comparative Manufacture Example 3, mild mixing was performed by utilizing a thinky mixer in the manufacture of a cathode, but the simple blend of lithium sulfide and the composite was utilized as a starting material, and thus, the all-solid-state secondary battery exhibited deteriorated initial efficiency and lifespan characteristics compared to the cases of Manufacture Examples 1 to 5. Like the case of Comparative Manufacture Example 3, in Comparative Manufacture Example 4, mild milling was performed by utilizing a thinky mixer, but the physical properties of the composite as a starting material were different from those of the composite of Example 3. Thus, a cathode manufactured therefrom and an all-solid-state secondary battery including the same exhibited deteriorated initial efficiency and lifespan characteristics compared to the cases of Manufacture Examples 1 to 5.

In some embodiments, the all-solid-state secondary battery of Manufacture Example 6 exhibited initial efficiency and lifespan characteristics that were similar to those of the all-solid-state secondary battery of Manufacture Example 5.

### Evaluation Example 5: Particle size analysis

### (1) Example 1 and Comparative Example 1

The particle sizes of the cathode mixtures prepared according to Examples 1 and 4 and Comparative Examples 1 to 4 were analyzed by utilizing a particle size analyzer (PSA), and the results thereof are shown in Table 5.

**Table 5**

| Classification | D10 (um) | D50 (um) | D90 (um) |
|---|---|---|---|
| Example 1 | 0.51 | 1.94 | 11.71 |
| Example 4 | 1.34 | 3.71 | 17.11 |
| Comparative Example 1 | 2.04 | 9.30 | 37.78 |
| Comparative Example 2 | 2.474 | 8.7 | 44.38 |
| Comparative Example 3 | 2.39 | 12.77 | 60.68 |
| Comparative Example 4 | 2.42 | 10.65 | 45.2 |

Referring to Table 5, it was confirmed that the cathode mixture of Examples 1 and 4, which had a particle size D50 of 5 or less, had a smaller particle size D50 than the cathode mixtures of Comparative Examples 1 to 4.

### Evaluation Example 6: X-ray diffraction analysis

X-ray diffraction analysis was performed on the cathode mixtures prepared according to Example 4 and Comparative Example 2.

The results of the XRD analysis of the cathode mixtures prepared according to Example 4 and Comparative Example 2 are shown in FIGS. 1B and 1C, respectively.

In the cathode mixtures, a first peak appearing at a diffraction angle 2θ of 26° to 27.5° had a first intensity (I_{A}), a second peak appearing at a diffraction angle 2θ of 30.02° to 30.06° had a second intensity (I_{B}), and a third peak appearing at a diffraction angle 2θ of 31° to 33.5° had a third intensity (Ic), and an intensity ratio (I_{B} /I_{A}) of the second intensity to the first intensity, and an intensity ratio (Ic /I_{A}) of the third intensity to the first intensity are shown in Table 6.

In FIG. 1B, 1, 2, and 3 denote the first peak, the second peak, and the third peak, respectively.

**Table 6**

| Classification | I_{B} /I_{A} | Ic /I_{A} |
|---|---|---|
| Example 4 | 1.398 | 0.934 |
| Comparative Example 2 | 0 | 0 |

As shown in Table 6, the intensity ratio (I_{B} /I_{A}) and the intensity ratio (Ic /I_{A}) of the cathode mixture obtained according to Example 4 were 1.398 and 0.934, respectively.

However, the second and third peaks with respect to the sulfide-based solid electrolyte were not observed in the cathode mixture of Comparative Example 2.

As illustrated in FIG. 1B, the first peak appeared at 2θ=26.71°, the second peak appeared at 2θ=30.05°, and the third peak appeared at 2θ=31.45°. Referring to FIG. 1B, it was confirmed that the cathode mixture of Example 4 maintained both (e.g., simultaneously) the peaks corresponding to the solid electrolyte and the peak corresponding to lithium sulfide by mild mixing.

Referring to FIG. 1C, the first peak appeared at 2θ=26.82°, and the second and third peaks corresponding to the sulfide-based solid electrolyte were not observed. As illustrated in FIG. 1C, it was confirmed that, in the cathode mixture of Comparative Example 2, the solid electrolyte was converted into an amorphous phase by mechanical milling, and as a result, all the peaks corresponding to the solid electrolyte disappeared and only the peak corresponding to lithium sulfide remained.

While embodiments have been described in more detail with reference to the accompanying drawings, the present disclosure is not limited by these embodiments. The appended claims define the invention.

According to one or more embodiments, provided are a cathode mixture in which damage to a solid electrolyte is reduced by mild mixing, and a cathode including the same. If (e.g., when) the cathode is utilized, an all-solid-state secondary battery having improvements in cell performance such as capacity and/or the like may be manufactured.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

The appended claims define the invention.

## Claims

1. A cathode mixture, the cathode mixture comprising a lithium sulfide composite and a solid electrolyte,
wherein, in an X-ray diffraction analysis spectrum of the cathode mixture, a first peak that exists at a diffraction angle 28 of 26° to 27.5° has a first intensity (I_{A}), and a second peak that exists at a diffraction angle 2θ of 30.02° to 30.06° has a second intensity (I_{B}), and
wherein an intensity ratio (I_{B} /I_{A}) of the second intensity to the first intensity satisfies 1<I_{B}/I_{A}≤2.

2. The cathode mixture as claimed in claim 1, wherein, in the X-ray diffraction analysis spectrum of the cathode mixture,
a third peak that exists at a diffraction angle 2θ of 31° to 33.5° has a third intensity (Ic), and
wherein an intensity ratio (Ic /I_{A}) of the third intensity to the first intensity satisfies 0.5≤I_{C}/I_{A}≤1.5; and/or wherein, in the X-ray diffraction analysis spectrum of the cathode mixture, a fourth peak exists at a diffraction angle 2θ of 25° to 25.8°.

3. The cathode mixture as claimed in claim 1 or 2, wherein the cathode mixture comprises composite particles having an average particle diameter of 5 micrometer (µm) or less.

4. The cathode mixture as claimed in any one of the preceding claims 1 to 3, wherein the lithium sulfide composite comprises
a lithium sulfide-carbon-based material composite,
a lithium sulfide-Lil-carbon-based material composite,
a lithium sulfide-solid electrolyte composite,
a lithium sulfide-carbon-based material-lithium salt composite,
a lithium sulfide-lithium salt composite,
a lithium sulfide-carbon-based material-solid electrolyte composite,
a lithium sulfide-metal carbide composite,
a lithium sulfide-carbon-based material-metal carbide composite,
a lithium sulfide-metal nitride composite,
a lithium sulfide-carbon-based material-metal nitride composite, or
a combination thereof; and/or wherein the lithium sulfide composite comprises a lithium sulfide-carbon-based material composite, and
wherein the lithium sulfide-carbon-based material composite comprises:
a core comprising a lithium-containing sulfide-based cathode active material; and
a shell along a surface of the core, wherein the shell comprises:
at least one first metal oxide represented by Formula MₐO_{b} (where 0<a≤3 and 0<b<4, and if a is 1, 2, or 3, b is not an integer); and
a first carbon-based material, and
wherein the first metal oxide is in a matrix of the first carbon-based material, and Mₐ comprises at least one metal selected from Groups 2 to 16 of the Periodic Table of Elements.

5. The cathode mixture as claimed in any one of the preceding claims 1 to 4, wherein the first metal oxide comprises a metal comprising at least one metal selected from among aluminum (Al), niobium (Nb), magnesium (Mg), scandium (Sc), titanium (Ti), zirconium (Zr), vanadium (V), tungsten (W), manganese (Mn), iron (Fe), cobalt (Co), palladium (Pd), copper (Cu), silver (Ag), zinc (Zn), antimony (Sb), silicon (Si), and selenium (Se); and/or wherein the first metal oxide comprises at least one selected from among:
Al₂O_{z} (where 0<z<3),
NbOₓ (where 0<x<2.5),
MgOₓ (where 0<x<1),
Sc₂O_{z} (where 0<z<3),
TiO_{y} (where 0<y<2),
ZrO_{y} (where 0<y<2),
V₂O_{z} (where 0<z<3),
WO_{y} (where 0<y<2),
MnO_{y} (where 0<y<2),
Fe₂O_{z} (where 0<z<3),
Co₃O_{w} (where 0<w<4),
PdOₓ (where 0<x<1),
CuOₓ (where 0<x<1),
AgOₓ (where 0<x<1),
ZnOₓ (where 0<x<1),
Sb₂O_{z} (where 0<z<3),
SiO_{z} (where 0<z<2), and
SeO_{y} (where 0<y<2).

6. The cathode mixture as claimed in claim 4, wherein the shell further comprises a second metal oxide represented by Formula MₐO_{c} (where 0<a≤3 and 0<c≤4, and if a is 1, 2, or 3, c is an integer), and
wherein
Mₐ of the second metal oxide comprises Mₐ of the first metal oxide,
a ratio (c/a) of c to a in the second metal oxide is greater than a ratio (b/a) of b to a in the first metal oxide,
the second metal oxide is selected from among Al₂O₃, NbO, NbO₂, Nb₂O₅MgO, Sc₂O₃, TiO₂, ZrO₂, V₂O₃, WO₂, MnO₂, Fe₂O₃, Co₃O₄, PdO, CuO, AgO, ZnO, Sb₂O₃, SiO₂, and SeO₂, and
the first metal oxide is a reduction product of the second metal oxide.

7. The cathode mixture as claimed in any one of the preceding claims 4 or 6, wherein the first carbon-based material comprises a carbon-based nanostructure, the carbon-based nanostructure comprising a two-dimensional carbon-based nanostructure, and the two-dimensional carbon-based nanostructure comprising graphene.

8. The cathode mixture as claimed in any one of the preceding claims 4 and 6 to 7, wherein the lithium sulfide composite comprises the lithium sulfide-LiI-carbon-based material composite, and
wherein, a size of Li₂S crystallites of the lithium sulfide-Lil-carbon-based material composite obtained in an X-ray diffraction analysis spectrum is less than or equal to 9.9 nanometer (nm), and the lithium sulfide-Lil-carbon-based material composite comprises a solid solution of Li₂S and Lil.

9. The cathode mixture as claimed in any one of the preceding claims 4 and 6 to 8, wherein the lithium sulfide composite further comprises a carbon-based material comprising a fibrous carbon-based material, and
wherein the fibrous carbon-based material comprises a carbon nanostructure, the carbon nanostructure comprises carbon nanofibers, carbon nanotubes, carbon nanobelts, carbon nanorods, or a combination thereof, and
an amount of the carbon-based material is 1 wt% to 20 wt% with respect to a total weight of the lithium sulfide composite.

10. The cathode mixture as claimed in any one of the preceding claims 1 to 9, wherein the solid electrolyte is an argyrodite-type sulfide-based solid electrolyte, and
wherein an amount of the solid electrolyte is 20 to 70 parts by weight with respect to 100 parts by weight of a total weight of the lithium sulfide composite and the solid electrolyte.

11. An all-solid-state secondary battery (1) according to claim 11, the all-solid-state secondary battery (1) comprising:
a cathode (10) comprising the cathode mixture as claimed in any one of the preceding claims 1 to 10;
an anode (20); and
a solid electrolyte layer (30) between the cathode (10) and the anode (20), preferably wherein the solid electrolyte layer (30) comprises a solid electrolyte, and the solid electrolyte comprises an oxide-based solid electrolyte, a sulfide-based solid electrolyte, a solid polymer electrolyte, or a combination thereof, and the all-solid-state secondary battery includes an electrolyte, the electrolyte comprises a liquid electrolyte, a gel electrolyte, or a combination thereof.

12. The all-solid-state secondary battery (1) as claimed in claim 11, wherein the cathode (10) comprises a cathode current collector (11), the anode (20) comprises an anode current collector (21), and at least one selected from among the cathode current collector (11) and the anode current collector (21) comprises a base film and a metal layer provided on at least one side of the base film, and
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

13. The all-solid-state secondary battery (1) as claimed in claims 11 or 12, wherein the anode (20) comprises an anode current collector (21) and a first anode active material layer (22) on one surface of the anode current collector (21),
wherein the first anode active material layer (22) comprises an anode active material and a binder,
wherein the anode active material comprises at least one selected from among a carbon-based anode active material and a metal or metalloid anode active material,
wherein the carbon-based anode active material comprises amorphous carbon, crystalline carbon, porous carbon, or a combination thereof, and
wherein the metal or metalloid anode active material comprises gold (Au), platinum (Pt), palladium (Pd), silicon (Si), silver (Ag), aluminum (Al), bismuth (Bi), tin (Sn), indium (In), zinc (Zn), or a combination thereof, preferably wherein the anode active material comprises: a carbon-based support; and a metal-based anode active material on the carbon-based support,
wherein the metal-based anode active material comprises a metal, a metal oxide, a composite of the metal and the metal oxide, or a combination thereof,
the metal-based anode active material is in particle form, and has a particle diameter of 1 nanometer (nm) to 20 nm,
the carbon-based support is in particle form, and the carbon-based anode active material has a particle diameter of 10 nm to 2 µm, and
the all-solid-state secondary battery (1) further comprises, after charging, a second anode active material layer between the anode current collector (21) and the first anode active material layer (22), and
wherein the second anode active material layer is a metal layer, the metal layer comprising lithium or a lithium alloy.

14. A method of manufacturing an all-solid-state secondary battery (1), the method comprising:
mildly mixing a lithium sulfide composite and a solid electrolyte to obtain a cathode mixture;
providing the cathode mixture on a cathode current collector (11), followed by drying, to manufacture a cathode (10);
preparing an anode (20); and
positioning an electrolyte between the cathode (10) and the anode (20).

15. The method as claimed in claim 14, wherein the solid electrolyte is an argyrodite-type sulfide-based solid electrolyte, and mildly mixing comprises mortar mixing, thinky mixing, blade mixing, or a combination thereof.

## Patentansprüche

1. Kathodengemisch, wobei das Kathodengemisch einen Lithiumsulfid-Verbundstoff und einen Festelektrolyten umfasst,
wobei in einem Röntgenbeugungsanalysespektrum des Kathodengemischs ein erster Peak, der bei einem Beugungswinkel 2θ von 26° bis 27,5° vorliegt, eine erste Intensität (I_{A}) aufweist und ein zweiter Peak, der bei einem Beugungswinkel 2θ von 30,02° bis 30,06° vorliegt, eine zweite Intensität (I_{B}) aufweist, und
wobei ein Intensitätsverhältnis (I_{B} /I_{A}) der zweiten Intensität zu der ersten Intensität 1<I_{B}/I_{A}≤2 erfüllt.

2. Kathodengemisch nach Anspruch 1, wobei in dem Röntgenbeugungsanalysespektrum des Kathodengemischs
eine dritter Peak, der bei einem Beugungswinkel 2θ von 31° bis 33,5° vorliegt, eine dritte Intensität (I_{C}) aufweist, und
wobei ein Intensitätsverhältnis (I_{C} /I_{A}) der dritten Intensität zu der ersten Intensität 0,5≤I_{C}/I_{A}≤1,5 erfüllt; und/oder wobei in dem Röntgenbeugungsanalysespektrum des Kathodengemischs ein vierter Peak bei einem Beugungswinkel 2θ von 25° bis 25,8° vorliegt.

3. Kathodengemisch nach Anspruch 1 oder 2, wobei das Kathodengemisch Verbundpartikel mit einem mittleren Partikeldurchmesser von 5 Mikrometer (µm) oder weniger umfasst.

4. Kathodengemisch nach einem der vorstehenden Ansprüche 1 bis 3, wobei der Lithiumsulfid-Verbundstoff umfasst
einen Lithiumsulfid-kohlenstoffbasiertes-Material-Verbundstoff,
einen Lithiumsulfid-LiI-kohlenstoffbasiertes-Material-Verbundstoff,
einen Lithiumsulfid-Festelektrolyt-Verbundstoff,
einen Lithiumsulfid-kohlenstoffbasiertes-Material-Lithiumsalz-Verbundstoff,
einen Lithiumsulfid-Lithiumsalz-Verbundstoff,
einen Lithiumsulfid-kohlenstoffbasiertes-Material-Festelektrolyt-Verbundstoff,
einen Lithiumsulfid-Metallcarbid-Verbundstoff,
einen Lithiumsulfid-kohlenstoffbasiertes-Material-Metallcarbid-Verbundstoff,
einen Lithiumsulfid-Metallnitrid-Verbundstoff,
einen Lithiumsulfid-kohlenstoffbasiertes-Material-Metallnitrid-Verbundstoff oder
eine Kombination davon; und/oder wobei der Lithiumsulfid-Verbundstoff einen Lithiumsulfid-kohlenstoffbasiertes-Material-Verbundstoff umfasst, und
wobei der Lithiumsulfid-kohlenstoffbasiertes-Material-Verbundstoff umfasst:
einen Kern, der ein lithiumhaltiges Kathoden-Aktivmaterial auf Sulfidbasis umfasst; und
eine Schale entlang einer Oberfläche des Kerns, wobei die Schale umfasst:
wenigstens ein erstes Metalloxid der Formel MₐO_{b} (wobei 0<a≤3 und 0<b<4, und wenn a 1, 2 oder 3 ist, b keine ganze Zahl ist); und
ein erstes kohlenstoffbasiertes Material, und
wobei das erste Metalloxid in einer Matrix des ersten kohlenstoffbasiertes Materials vorliegt und Mₐ wenigstens ein Metall ausgewählt aus den Gruppen 2 bis 16 des Periodensystems der Elemente umfasst.

5. Kathodengemisch nach einem der vorstehenden Ansprüche 1 bis 4, wobei das erste Metalloxid ein Metall umfasst, das wenigstens ein Metall ausgewählt aus Aluminium (Al), Niob (Nb), Magnesium (Mg), Scandium (Sc), Titan (Ti), Zirkonium (Zr), Vanadium (V), Wolfram (W), Mangan (Mn), Eisen (Fe), Kobalt (Co), Palladium (Pd), Kupfer (Cu), Silber (Ag), Zink (Zn), Antimon (Sb), Silicium (Si) und Selen (Se) umfasst; und/oder wobei das erste Metalloxid wenigstens eines umfasst ausgewählt aus:
Al₂O_{z} (wobei 0<z<3),
NbOₓ (wobei 0<x<2,5),
MgOₓ (wobei 0<x<1),
Sc₂O_{z} (wobei 0<z<3),
TiO_{y} (wobei 0<y<2),
ZrO_{y} (wobei 0<y<2),
V₂O_{Z} (wobei 0<z<3),
WO_{y} (wobei 0<y<2),
MnO_{y} (wobei 0<y<2),
Fe₂O_{z} (wobei 0<z<3),
Co₃O_{w} (wobei 0<W<4),
PdOₓ (wobei 0<x<1),
CuOₓ (wobei 0<x<1),
AgOₓ (wobei 0<x<1),
ZnOₓ (wobei 0<x<1),
Sb₂O_{z} (wobei 0<z<3),
SiO_{z} (wobei 0<z<2) und
SeO_{y} (wobei 0<y<2).

6. Kathodengemisch nach Anspruch 4, wobei die Schale ferner ein zweites Metalloxid der Formel MₐO_{c} umfasst (wobei 0<a≤3 und 0<c≤4, und wenn a 1, 2 oder 3 ist, c eine ganze Zahl ist), und
wobei
Mₐ des zweiten Metalloxids Mₐ des ersten Metalloxids umfasst,
ein Verhältnis (c/a) von c zu a in dem zweiten Metalloxid größer als ein Verhältnis (b/a) von b zu a in dem ersten Metalloxid ist,
das zweite Metalloxid ausgewählt ist aus Al₂O₃, NbO, NbO₂, Nb₂O₅MgO, Sc₂O₃, TiO₂, ZrO₂, V₂O₃, WO₂, MnO₂, Fe₂O₃, Co₃O₄, PdO, CuO, AgO, ZnO, Sb₂O₃, SiO₂ und SeO₂, und
das erste Metalloxid ein Reduktionsprodukt des zweiten Metalloxids ist.

7. Kathodengemisch nach einem der vorstehenden Ansprüche 4 oder 6, wobei das erste kohlenstoffbasierte Material eine kohlenstoffbasierte Nanostruktur umfasst, wobei die kohlenstoffbasierte Nanostruktur eine zweidimensionale kohlenstoffbasierte Nanostruktur umfasst und die zweidimensionale kohlenstoffbasierte Nanostruktur Graphen umfasst.

8. Kathodengemisch nach einem der vorstehenden Ansprüche 4 und 6 bis 7, wobei der Lithiumsulfid-Verbundstoff den Lithiumsulfid-LiI-kohlenstoffbasiertes-Material-Verbundstoff umfasst, und
wobei eine Größe von Li₂S-Kristalliten des Lithiumsulfid-LiI-kohlenstoffbasiertes-Material-Verbundstoffs,
erhalten in einem Röntgenbeugungsanalysespektrum, kleiner als oder gleich 9,9 Nanometer (nm) ist und der Lithiumsulfid-LiI-kohlenstoffbasiertes-Material-Verbundstoff eine feste Lösung von Li₂S und LiI umfasst.

9. Kathodengemisch nach einem der vorstehenden Ansprüche 4 und 6 bis 8, wobei der Lithiumsulfid-Verbundstoff ferner ein kohlenstoffbasiertes Material umfasst, das ein faserartiges kohlenstoffbasiertes Material umfasst, und
wobei das faserartige kohlenstoffbasierte Material eine Kohlenstoffnanostruktur umfasst, die Kohlenstoffnanostruktur Kohlenstoffnanofasern, Kohlenstoffnanoröhren, Kohlenstoffnanobänder, Kohlenstoffnanostäbe oder eine Kombination davon umfasst, und
eine Menge des kohlenstoffbasiertes Materials 1 Gew.-% bis 20 Gew.-%, bezogen auf das Gesamtgewicht des Lithiumsulfid-Verbundstoffs, beträgt.

10. Kathodengemisch nach einem der vorstehenden Ansprüche 1 bis 9, wobei der Festelektrolyt ein Festelektrolyt auf auf Argyrodit-Typ-Sulfid-Basis ist, und
wobei eine Menge des Festelektrolyten 20 bis 70 Gewichtsteile, bezogen auf 100 Gewichtsteile eines Gesamtgewichts des Lithiumsulfid-Verbundstoffs und des Festelektrolyten, beträgt.

11. Festkörper-Sekundärbatterie (1), wobei die Festkörper-Sekundärbatterie (1) umfasst:
eine Kathode (10) umfassend das Kathodengemisch nach einem der vorstehenden Ansprüche 1 bis 10;
eine Anode (20); und
eine Festelektrolytschicht (30) zwischen der Kathode (10) und der Anode (20), vorzugsweise wobei die Festelektrolytschicht (30) einen Festelektrolyten umfasst und der Festelektrolyt einen Festelektrolyten auf Oxidbasis, einen Festelektrolyten auf Sulfidbasis, einen Festelektrolyten auf Polymerbasis oder eine Kombination davon umfasst und die Festkörper-Sekundärbatterie einen Elektrolyten umfasst, wobei der Elektrolyt einen Flüssigelektrolyten, einen Gelelektrolyten oder eine Kombination davon umfasst.

12. Festkörper-Sekundärbatterie (1) nach Anspruch 11, wobei die Kathode (10) einen Kathoden-Stromabnehmer (11) umfasst, die Anode (20) einen Anoden-Stromabnehmer (21) umfasst und wenigstens eines ausgewählt aus dem Kathoden-Stromabnehmer (11) und dem Anoden-Stromabnehmer (21) eine Basisfolie und eine Metallschicht, die auf wenigstens einer Seite der Basisfolie bereitgestellt ist, umfasst, und
wobei die Basisfolie ein Polymer umfasst, wobei das Polymer Polyethylenterephthalat (PET), Polyethylen (PE), Polypropylen (PP), Polybutylenterephthalat (PBT), Polyimid (PI) oder eine Kombination davon umfasst, und
die Metallschicht Indium (In), Kupfer (Cu), Magnesium (Mg), Edelstahl, Titan (Ti), Eisen (Fe), Kobalt (Co), Nickel (Ni), Zink (Zn), Aluminium (Al), Germanium (Ge), Lithium (Li) oder eine Legierung davon umfasst.

13. Festkörper-Sekundärbatterie (1) nach Anspruch 11 oder 12, wobei die Anode (20) einen Anoden-Stromabnehmer (21) und eine erste Anoden-Aktivmaterialschicht (22) auf einer Oberfläche des Anoden-Stromabnehmers (21) umfasst, wobei die erste Anoden-Aktivmaterialschicht (22) ein Anoden-Aktivmaterial und ein Bindemittel umfasst,
wobei das Anoden-Aktivmaterial wenigstens eines ausgewählt aus einem kohlenstoffbasierten Anoden-Aktivmaterial und einem Metall- oder Metalloid-Anoden-Aktivmaterial umfasst,
wobei das kohlenstoffbasierte Anodenaktivmaterial amorphen Kohlenstoff, kristallinen Kohlenstoff, porösen Kohlenstoff oder eine Kombination davon umfasst, und
wobei das Metall- oder Metalloid-Anoden-Aktivmaterial Gold (Au), Platin (Pt), Palladium (Pd), Silicium (Si), Silber (Ag), Aluminium (Al), Wismut (Bi), Zinn (Sn), Indium (In), Zink (Zn), oder eine Kombination davon umfasst, wobei vorzugsweise das Anoden-Aktivmaterial umfasst: einen kohlenstoffbasierten Träger; und ein metallbasiertes Anoden-Aktivmaterial auf dem kohlenstoffbasierten Träger,
wobei das metallbasierte Anoden-Aktivmaterial ein Metall, ein Metalloxid, einen Verbundstoff aus dem Metall und dem Metalloxid oder eine Kombination davon umfasst,
das metallbasierte Anoden-Aktivmaterial in Partikelform vorliegt und einen Partikeldurchmesser von 1 Nanometer (nm) bis 20 nm aufweist,
der kohlenstoffbasierte Träger in Partikelform vorliegt und das kohlenstoffbasierte Anoden-Aktivmaterial einen Partikeldurchmesser von 10 nm bis 2 µm aufweist, und
die Festkörper-Sekundärbatterie (1) ferner nach dem Laden eine zweite Anoden-Aktivmaterialschicht zwischen dem Anoden-Stromabnehmer (21) und der ersten Anoden-Aktivmaterialschicht (22) umfasst, und
wobei die zweite Anoden-Aktivmaterialschicht eine Metallschicht ist, wobei die Metallschicht Lithium oder eine Lithiumlegierung umfasst.

14. Verfahren zur Herstellung einer Festkörper-Sekundärbatterie (1), wobei das Verfahren umfasst:
vorsichtiges Mischen eines Lithiumsulfid-Verbundstoffs und eines Festelektrolyten, um ein Kathodengemisch zu erhalten;
Bereitstellen des Kathodengemischs auf einem Kathoden-Stromabnehmer (11), gefolgt von Trocknen, um eine Kathode (10) herzustellen;
Herstellen einer Anode (20); und
Anordnen eines Elektrolyten zwischen der Kathode (10) und der Anode (20).

15. Verfahren nach Anspruch 14, wobei der Festelektrolyt ein Festelektrolyt auf Argyrodit-Typ-Sulfid-Basis ist und das vorsichtige Mischen Mörsermischen, dünnes Mischen, Schaufelmischen oder eine Kombination davon umfasst.

## Revendications

1. Mélange de cathode, le mélange de cathode comprenant un composite de sulfure de lithium et un électrolyte solide,
dans lequel, dans un spectre d'analyse par diffraction des rayons X du mélange de cathode, un premier pic qui existe à un angle de diffraction 2θ de 26° à 27,5° a une première intensité (I_{A}), et un deuxième pic qui existe à un angle de diffraction 2θ de 30,02° à 30,06° a une deuxième intensité (I_{B}), et
dans lequel un rapport d'intensités (I_{B} /I_{A}) de la deuxième intensité sur la première intensité satisfait 1 < I_{B} / I_{A} ≤ 2.

2. Mélange de cathode selon la revendication 1, **caractérisé en ce que**, dans le spectre d'analyse par diffraction des rayons X du mélange de cathode,
un troisième pic qui existe à un angle de diffraction 2θ de 31° à 33,5° a une troisième intensité (I_{C}), et
dans lequel un rapport d'intensités (I_{C} /I_{A}) de la troisième intensité sur la première intensité satisfait 0,5 ≤ I_{C}/I_{A} ≤ 1,5 ; et/ou dans lequel, dans le spectre d'analyse par diffraction des rayons X du mélange de cathode, un quatrième pic existe à un angle de diffraction 2θ de 25° à 25,8°.

3. Mélange de cathode selon la revendication 1 ou 2, dans lequel le mélange de cathode comprend des particules composites ayant un diamètre moyen de particule de 5 micromètres (µm) ou moins.

4. Mélange de cathode selon l'une quelconque des revendications précédentes 1 à 3, dans lequel le composite de sulfure de lithium comprend un composite sulfure de lithium-matériau à base de carbone,
un composite sulfure de lithium-LiI-matériau à base de carbone,
un composite sulfure de lithium-électrolyte solide,
un composite sulfure de lithium-matériau à base de carbone-sel de lithium,
un composite sulfure de lithium-sel de lithium,
un composite sulfure de lithium-matériau à base de carbone-électrolyte solide,
un composite sulfure de lithium-carbure métallique,
un composite sulfure de lithium-matériau à base de carbone-carbure métallique,
un composite sulfure de lithium-nitrure métallique,
un composite sulfure de lithium-matériau à base de carbone-nitrure métallique, ou
une combinaison de ceux-ci ; et/ou dans lequel le composite de sulfure de lithium comprend un composite sulfure de lithium-matériau à base de carbone, et
dans lequel le composite sulfure de lithium-matériau à base de carbone comprend :
un noyau comprenant un matériau actif de cathode à base de sulfure contenant du lithium ; et
une enveloppe le long d'une surface du noyau, l'enveloppe comprenant :
au moins un premier oxyde métallique représenté par la formule MₐO_{b} (où 0 < a ≤ 3 et 0 < b < 4, et si a est 1, 2 ou 3, b n'est pas un entier) ; et
un premier matériau à base de carbone, et
dans lequel le premier oxyde métallique est dans une matrice du premier matériau à base de carbone, et Mₐ comprend au moins un métal choisi dans les groupes 2 à 16 du tableau périodique des éléments.

5. Mélange de cathode selon l'une quelconque des revendications précédentes 1 à 4, dans lequel le premier oxyde métallique comprend un métal comprenant au moins un métal choisi parmi l'aluminium (Al), le niobium (Nb), le magnésium (Mg), le scandium (Sc), le titane (Ti), le zirconium (Zr), le vanadium (V), le tungstène (W), le manganèse (Mn), le fer (Fe), le cobalt (Co), le palladium (Pd), le cuivre (Cu), l'argent (Ag), le zinc (Zn), l'antimoine (Sb), le silicium (Si) et le sélénium (Se) ; et/ou dans lequel le premier oxyde métallique comprend au moins l'un choisi parmi :
Al₂O_{z} (où 0 < z < 3),
NbOₓ (où 0 < x < 2,5),
MgOₓ (où 0 < x <1),
Sc₂O_{z} (où 0 < z < 3),
TiO_{y} (où 0 < y < 2),
ZrO_{y} (où 0 < y < 2),
V₂O_{z} (où 0 < z < 3),
WO_{y} (où 0 < y < 2),
MnO_{y} (où 0 < y < 2),
Fe₂O_{z} (où 0 < z < 3),
Co₃O_{w} (où 0 < w < 4),
PdOₓ (où 0 < x < 1),
CuOₓ (où 0 < x < 1),
AgOₓ (où 0 < x < 1),
ZnOₓ (où 0 < x < 1),
Sb₂O_{z} (où 0 < z < 3),
SiO_{z} (où 0 < z < 2), et
SeO_{y} (où 0 < y < 2).

6. Mélange de cathode selon la revendication 4, dans lequel l'enveloppe comprend en outre un deuxième oxyde métallique représenté par la formule MₐO_{c} (où 0 < a ≤ 3 et 0 < c ≤ 4, et si a est 1, 2 ou 3, c est un entier), et
dans lequel
Mₐ du deuxième oxyde métallique comprend Mₐ du premier oxyde métallique,
un rapport (c/a) de c sur a dans le deuxième oxyde métallique est supérieur à un rapport (b/a) de b sur a dans le premier oxyde métallique.
le deuxième oxyde métallique est choisi parmi Al₂O₃, NbO, NbO₂, Nb₂O₅MgO, Sc₂O₃, TiO₂, ZrO₂, V₂O₃, WO₂, MnO₂, Fe₂O₃, Co₃O₄, PdO, CuO, AgO, ZnO, Sb₂O₃, SiO₂, et SeO₂, et
le premier oxyde métallique est un produit de réduction du deuxième oxyde métallique.

7. Mélange de cathode selon l'une quelconque des revendications précédentes 4 ou 6, dans lequel le premier matériau à base de carbone comprend une nanostructure à base de carbone, la nanostructure à base de carbone comportant une nanostructure à base de carbone bidimensionnelle et la nanostructure à base de carbone bidimensionnelle comprenant du graphène.

8. Mélange de cathode selon l'une quelconque des revendications précédentes 4 et 6 à 7, dans lequel le composite de sulfure de lithium comprend le composite sulfure de lithium-LiI-matériau à base de carbone, et
dans lequel une taille de cristallites de Li₂S du composite sulfure de lithium-LiI-matériau à base de carbone obtenu dans un spectre d'analyse par diffraction des rayons X est inférieure ou égale à 9,9 nanomètres (nm), et le composite sulfure de lithium-LiI-matériau à base de carbone comprend une solution solide de Li₂S et de LiI.

9. Mélange de cathode selon l'une quelconque des revendications précédentes 4 et 6 à 8, dans lequel le composite de sulfure de lithium comprend en outre un matériau à base de carbone comprenant un matériau à base de carbone fibreux, et
dans lequel le matériau à base de carbone fibreux comprend une nanostructure de carbone, la nanostructure de carbone comprend des nanofibres de carbone, des nanotubes de carbone, des nanoceintures de carbone, des nanotiges de carbone, ou une combinaison de ceux-ci, et une quantité du matériau à base de carbone est de 1 % en poids à 20 % en poids par rapport au poids total du composite de sulfure de lithium.

10. Mélange de cathode selon l'une quelconque des revendications précédentes 1 à 9, dans lequel l'électrolyte solide est un électrolyte solide à base de sulfure de type argyrodite, et
dans lequel la quantité de l'électrolyte solide est de 20 à 70 parties en poids par rapport à 100 parties en poids d'un poids total du composite de sulfure de lithium et de l'électrolyte solide.

11. Batterie secondaire entièrement à l'état solide (1), où la batterie secondaire entièrement à l'état solide (1) comprenant :
une cathode (10) comprenant le mélange de cathode selon l'une quelconque des revendications précédentes 1 à 10 ;
une anode (20) ; et
une couche d'électrolyte solide (30) située entre la cathode (10) et l'anode (20), la couche d'électrolyte solide (30) comprenant de préférence un électrolyte solide, et l'électrolyte solide comprenant un électrolyte solide à base d'oxyde, un électrolyte solide à base de sulfure, un électrolyte de polymère solide ou une combinaison de ceux-ci, et la batterie secondaire entièrement à l'état solide comprend un électrolyte, l'électrolyte comprend un électrolyte liquide, un électrolyte en gel ou une combinaison de ceux-ci.

12. Batterie secondaire à semi-conducteurs (1) selon la revendication 11, dans laquelle la cathode (10) comprend un collecteur de courant cathodique (11), l'anode (20) comprend un collecteur de courant anodique (21), et au moins un collecteur choisi parmi le collecteur de courant cathodique (11) et le collecteur de courant anodique (21) comprend un film de base et une couche métallique disposée sur au moins un côté du film de base, et
dans lequel le film de base comporte un polymère, le polymère comprenant le poly(téréphtalate d'éthylène) (PET), le polyéthylène (PE), le polypropylène (PP), le poly(téréphtalate de butylène) (PBT), le polyimide (PI), ou une combinaison de ceux-ci, et
la couche métallique comprend de l'indium (In), du cuivre (Cu), du magnésium (Mg), de l'acier inoxydable, du titane (Ti), du fer (Fe), du cobalt (Co), du nickel (Ni), du zinc (Zn), de l'aluminium (Al), du germanium (Ge), du lithium (Li) ou un de leurs alliages.

13. Batterie secondaire (1) entièrement à l'état solide selon la revendication 11 ou 12, dans laquelle l'anode (20) comprend un collecteur de courant anodique (21) et une première couche de matériau actif d'anode (22) sur une surface du collecteur de courant anodique (21),
dans laquelle la première couche de matériau actif d'anode (22) comprend un matériau actif d'anode et un liant,
dans laquelle le matériau actif d'anode comprend au moins un matériau choisi parmi un matériau actif d'anode à base de carbone et un matériau actif d'anode métallique ou métalloïde,
dans laquelle le matériau actif d'anode à base de carbone comprend du carbone amorphe, du carbone cristallin, du carbone poreux, ou une combinaison correspondante, et
dans laquelle le matériau actif d'anode métallique ou métalloïde comprend de l'or (Au), du platine (Pt), du palladium (Pd), du silicium (Si), de l'argent (Ag), de l'aluminium (Al), du bismuth (Bi), de l'étain (Sn), de l'indium (In), du zinc (Zn), ou une combinaison de ceux-ci, de préférence dans laquelle le matériau actif d'anode comprend : un support à base de carbone ; et un matériau actif d'anode à base de métal sur le support à base de carbone,
dans laquelle le matériau actif d'anode à base de métal comprend un métal, un oxyde métallique, un composite du métal et de l'oxyde métallique ou une combinaison de ceux-ci,
le matériau actif d'anode à base de métal est sous forme de particules, et a un diamètre de particule de 1 nanomètre (nm) à 20 nm,
le support à base de carbone est sous forme de particules, et le matériau actif d'anode à base de carbone a un diamètre de particule de 10 nm à 2 µm, et
la batterie secondaire entièrement à l'état solide (1) comprend en outre, après charge, une deuxième couche de matériau actif d'anode entre le collecteur de courant anodique (21) et la première couche de matériau actif d'anode (22), et
dans lequel la deuxième couche de matériau actif d'anode est une couche métallique, la couche métallique comprenant du lithium ou un alliage de lithium.

14. Procédé de fabrication d'une batterie secondaire entièrement à l'état solide (1), le procédé comprenant :
mélanger modérément un composite de sulfure de lithium et un électrolyte solide pour obtenir un mélange de cathode ;
placer le mélange de cathode sur un collecteur de courant de cathode (11), puis sécher, pour fabriquer une cathode (10) ;
préparer une anode (20) ; et
disposer un électrolyte entre la cathode (10) et l'anode (20).

15. Procédé selon la revendication 14, dans lequel l'électrolyte solide est un électrolyte solide à base de sulfure de type argyrodite, et un mélange modéré comprend un mélange au mortier, un mélange fin, un mélange à la lame, ou une combinaison de ceux-ci.
